# EUROPEAN PATENT APPLICATION

(11) **EP 4 395 291 A1**
(43) Date of publication of application: **03.07.2024**
(21) Application number: 23814078.4
(22) Date of filing: 03.11.2023
(51) Int. Cl.: H04M 1/72454, H04M 1/02, H04M 1/72469, G06F 3/04817

(54) **ELECTRONIC DEVICE COMPRISING FLEXIBLE DISPLAY, AND ELECTRONIC DEVICE CONTROL METHOD**

(30) Priority: 07.11.2022 KR 20220147258; 27.12.2022 KR 20220185208
(71) Applicant: Samsung Electronics Co., Ltd., Suwon-Si, Gyeonggi-do 16677 (KR)
(72) Inventor: PARK, Gyeongtae, Suwon-si- Gyeonggi-do 16677 (KR); PARK, Sunghwan, Suwon-si- Gyeonggi-do 16677 (KR); PARK, Jihea, Suwon-si- Gyeonggi-do 16677 (KR)
(74) Representative: Gulde & Partner
(86) International application number: PCT/KR2023/017498
(87) International publication number: WO 2024/101789

(57) **Abstract**

An electronic device according to various embodiments of the disclosure may include a first housing, a second housing slidably coupled to the first housing, a flexible display having a visually exposed display region that is reduced or expanded based on sliding in or sliding out of the second housing, an input unit configured to receive an input, a processor, and memory storing instructions that, when executed by the processor, cause the electronic device to: identify whether a condition of the electronic device for disabling sliding in or sliding out of the second housing is satisfied, receive an input via the input unit, operate in a first mode in which slide-in or slide-out of the second housing is controlled based on the input and the condition not being satisfied, operate in the first mode in which slide-in or slide-out of the second housing is disabled based on the condition being satisfied, and operate in a second mode in which the slide-in or slide-out of the second housing is disabled regardless of the condition being satisfied or not.

## Description

### [Technical Field]

Various embodiments of the disclosure relate to an electronic device including a flexible display and a method of controlling the electronic device.

### [Background Art]

The use of an electronic device such as a smartphone is increasing, and various functions are being provided to the electronic device.

The electronic device may include a flexible display that is expanded according to a slide-out state of a housing so as to provide a wider screen to the user.

The electronic device may provide more text and/or larger image information to the user by using the flexible display that is expanded from a slide-in state to a slide-out state.

### [Disclosure of Invention]

### [Technical Problem]

An electronic device may include an electronic device (e.g., slidable electronic device) having a flexible display (e.g., rollable display) with an expandable display area.

The electronic device may include a first housing and a second housing which are coupled to each other so as to be movable with respect to each other.

The first housing and the second housing of the electronic device may be at least partially fittedly coupled to each other so as to be slidable with respect to each other, and may support at least a part of the flexible display.

In the electronic device, for example, while the first housing is fixed, the second housing may be introduced inside the first housing or ejected to the outside of the first housing.

When the second housing is introduced in the first housing (in a slide-in state), a display region of the flexible display is reduced. When the second housing is ejected out of the first housing (in a slide-out state), the display region of the flexible display may be expanded. The flexible display may be disposed in the first housing so as to be partially bendable.

In a case where the electronic device is in a particular state or situation, when the flexible display is expanded from a slide-in state to a slide-out state or reduced from a slide-out state to a slide-in state, the electronic device may perform a misoperation or may be damaged. For example, in a particular situation such as the electronic device making a call, using a designated application (e.g., navigation application), being charged, or having been flipped over, the flexible display may be expanded or reduced even if a user doesn't want it to be.

Various embodiments of the disclosure may provide a method and an electronic device by which shape transformation of a flexible display is controllable when the electronic device is in a designated state or situation.

The technical task to be achieved by the disclosure is not limited to that mentioned above, and other technical tasks that are not mentioned above may be clearly understood to a person having common knowledge in the technical field to which the disclosure belongs based on the description provided below.

### [Solution to Problem]

An electronic device according to an embodiment of the disclosure includes a first housing, a second housing slidably coupled to the first housing, a flexible display having a visually exposed display region that is reduced or expanded based on sliding in or sliding out of the second housing, an input unit configured to receive an input, a processor, and memory storing instructions that, when executed by the processor, cause the electronic device to: identify whether a condition of the electronic device for disabling sliding in or sliding out of the second housing is satisfied, receive an input via the input unit, operate in a first mode in which slide-in or slide-out of the second housing is controlled based on the input and the condition not being satisfied, operate in the first mode in which slide-in or slide-out of the second housingis disabled based on the condition being satisfied, and operate in a second mode in which the slide-in or slide-out of the second housing is disabled regardless of the condition being satisfied or not.

A method of controlling an electronic device according to an embodiment of the disclosure includes identifying whether a trigger signal for reducing or expanding a flexible display to correspond to sliding in or sliding out of a second housing slidably coupled to a first housing of the electronic device is input via an input unit, and providing a trigger selection mode for controlling sliding in or sliding out of the second housing, based on identification of input of the trigger signal.

According to an embodiment, the method of controlling the electronic device is performed using a non-transitory computer-readable storage medium that stores one or more programs. The one or more programs according to an embodiment include instructions for performing identifying whether a trigger signal for reducing or expanding a flexible display to correspond to sliding in or sliding out of a second housing slidably coupled to a first housing of the electronic device is input via an input unit, and providing a trigger selection mode for controlling sliding in or sliding out of the second housing, based on identification of input of the trigger signal.

### [Advantageous Effects of invention]

According to various embodiments of the disclosure, when an electronic device is in a designated state or situation, a user is able to selectively control at least one of a slide-in state, a slide-out state, and a fixed state of a flexible display (or rollable display) included in the electronic device, thereby reducing malfunction of or damage to the electronic device.

Various other advantageous effects identified explicitly or implicitly through this document may be provided.

### [Brief Description of Drawings]

In relation to the description of drawings, the same or similar elements may be indicated by the same or similar reference signs.
FIG. 1 is a block diagram of an electronic device in a network environment according to various embodiments of the disclosure;
FIG. 2A and FIG. 2B are diagrams illustrating a front surface and a rear surface of an electronic device in a slide-in state according to various embodiments of the disclosure;
FIG. 3A and FIG. 3B are diagrams illustrating a front surface and a rear surface of an electronic device in a slide-out state according to various embodiments of the disclosure;
FIG. 4 is an exploded perspective view of an electronic device according to various embodiments of the disclosure;
FIG. 5A is a sectional view of an electronic device taken along line 5a-5a in FIG. 2A according to various embodiments of the disclosure;
FIG. 5B is a sectional view of an electronic device in an intermediate state according to various embodiments of the disclosure;
FIG. 5C is a sectional view of an electronic device taken along line 5c-5c in FIG. 3A according to various embodiments of the disclosure;
FIG. 6 is a block diagram roughly illustrating a configuration of an electronic device including a flexible display according to an embodiment of the disclosure;
FIG. 7 is a diagram roughly illustrating a first mode change icon used in an electronic device according to an embodiment of the disclosure;
FIG. 8 is a diagram roughly illustrating a second mode change icon used in an electronic device according to an embodiment of the disclosure;
FIG. 9 is a diagram roughly illustrating a third mode change icon used in an electronic device according to an embodiment of the disclosure;
FIG. 10A is a diagram roughly illustrating a screen for selecting a first mode change icon of a flexible display of an electronic device according to an embodiment of the disclosure;
FIG. 10B is a diagram roughly illustrating a screen for selecting a second mode change icon of a flexible display of an electronic device according to an embodiment of the disclosure;
FIG. 10C is a diagram roughly illustrating a screen for selecting a third mode change icon of a flexible display of an electronic device according to an embodiment of the disclosure;
FIG. 11A is a diagram roughly illustrating an embodiment of an input signal (e.g., long press) for an input unit of an electronic device according to an embodiment of the disclosure;
FIG. 11B is a diagram roughly illustrating a mode change menu provided via a flexible display according to an embodiment of the disclosure according to the input signal illustrated in FIG. 11A;
FIG. 12A is a diagram roughly illustrating an embodiment of an input signal (e.g., double tap) for an input unit of an electronic device according to an embodiment of the disclosure;
FIG. 12B is a diagram roughly illustrating a second mode change icon generated according to the input signal illustrated in FIG. 12A of an electronic device according to an embodiment of the disclosure;
FIG. 12C is a diagram roughly illustrating a third mode change icon generated according to the input signal illustrated in FIG. 12B of an electronic device according to an embodiment of the disclosure;
FIG. 12D is a diagram roughly illustrating a first mode change icon generated according to the input signal illustrated in FIG. 12C of an electronic device according to an embodiment of the disclosure;
FIG. 13 is a diagram roughly illustrating a mode change shortcut menu of an electronic device according to an embodiment of the disclosure;
FIG. 14A is a diagram roughly illustrating an embodiment in which a mode change icon is changed according to a first input signal for a flexible display when an electronic device according to an embodiment of the disclosure is in a lock screen state;
FIG. 14B is a diagram roughly illustrating an embodiment in which a mode change icon is changed according to a second input signal for a flexible display when an electronic device according to an embodiment of the disclosure is in a lock screen state;
FIG. 14C is a diagram roughly illustrating an embodiment in which a mode change icon is changed according to a third input signal for a flexible display when an electronic device according to an embodiment of the disclosure is in a lock screen state;
FIG. 15 is a diagram roughly illustrating a screen for a configuration menu enabling selection of a mode change icon displayed in a flexible display of an electronic device according to an embodiment of the disclosure;
FIG. 16 is a diagram roughly illustrating an embodiment of providing a mode change icon expected according to a state of an electronic device according to an embodiment of the disclosure;
FIG. 17A is a diagram roughly illustrating an embodiment of an input signal (e.g., tap) for an input unit when an electronic device according to an embodiment of the disclosure is in a second mode;
FIG. 17B is a diagram roughly illustrating a pop-up provided based on a signal input via an input unit when an electronic device according to an embodiment of the disclosure is in a second mode;
FIG. 18A is a diagram roughly illustrating an embodiment of an input signal (e.g., tap) for an input unit when an electronic device according to an embodiment of the disclosure is in a second mode;
FIG. 18B is a diagram roughly illustrating a first pop-up provided based on a signal input via an input unit when an electronic device according to an embodiment of the disclosure is in a second mode;
FIG. 18C is a diagram roughly illustrating a mode change icon provided according to an input signal (e.g., tap) for an input unit by an electronic device according to an embodiment of the disclosure;
FIG. 18D is a diagram roughly illustrating an embodiment in which the shape of a flexible display according to an embodiment of the disclosure is changed according to a touch of a mode change icon;
FIG. 19A is a diagram roughly illustrating text information displayed via a flexible display of an electronic device according to an embodiment of the disclosure;
FIG. 19B is a diagram roughly illustrating a screen in which a flexible display of an electronic device according to an embodiment of the disclosure is operated as a multi-window;
FIG. 20 is a diagram roughly illustrating a screen in which a flexible display of an electronic device according to an embodiment of the disclosure displays text information and video information;
FIG. 21 is a diagram roughly illustrating a screen in which a flexible display of an electronic device according to an embodiment of the disclosure displays image information;
FIG. 22 is a flowchart roughly illustrating a method of controlling an electronic device according to an embodiment of the disclosure;
FIG. 23 is a flowchart roughly illustrating a method of controlling mode change of an electronic device according to an embodiment of the disclosure; and
FIG. 24 is a flowchart roughly illustrating a method of controlling mode change of an electronic device according to various embodiments of the disclosure.

### [Mode for the Invention]

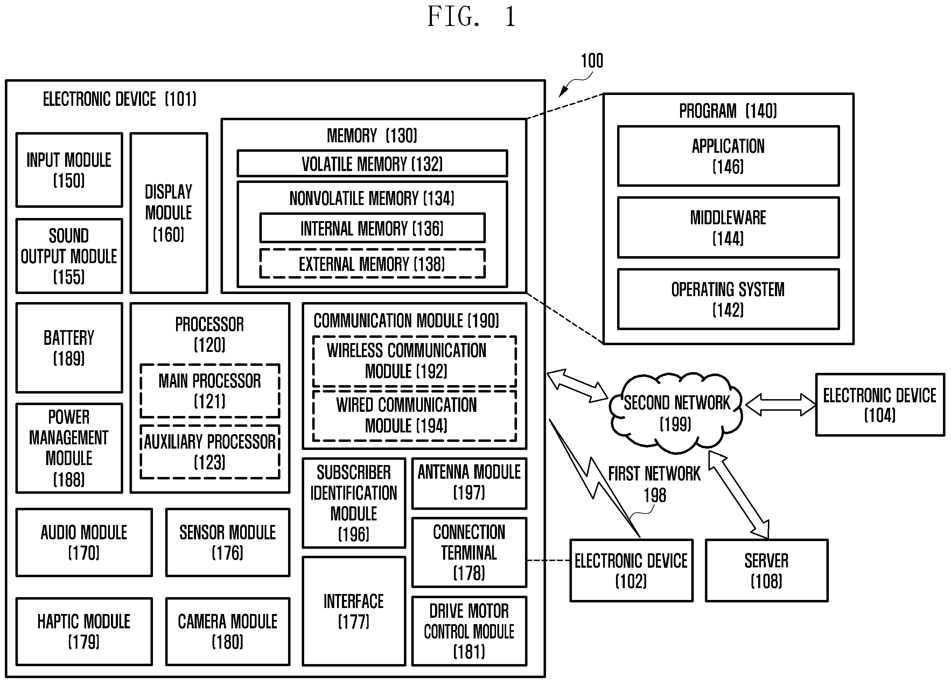

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

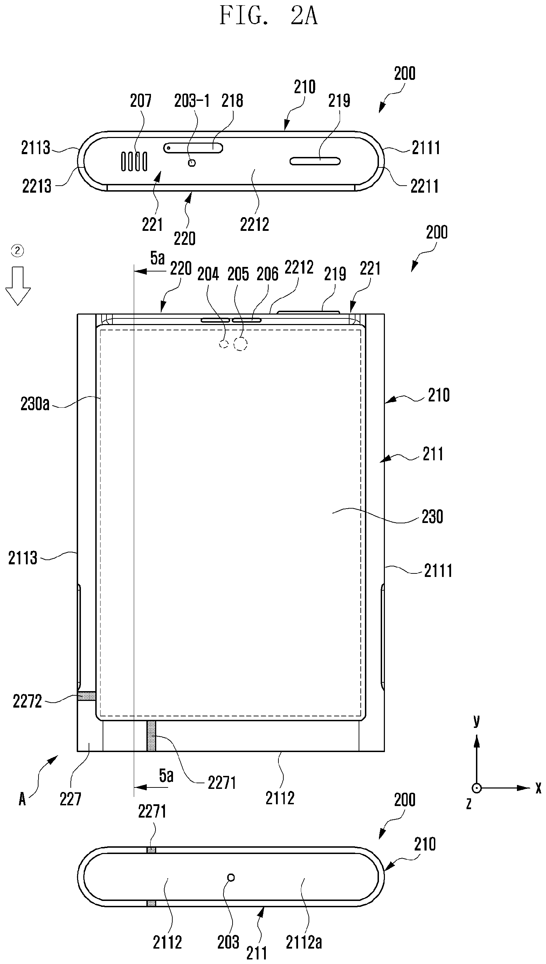

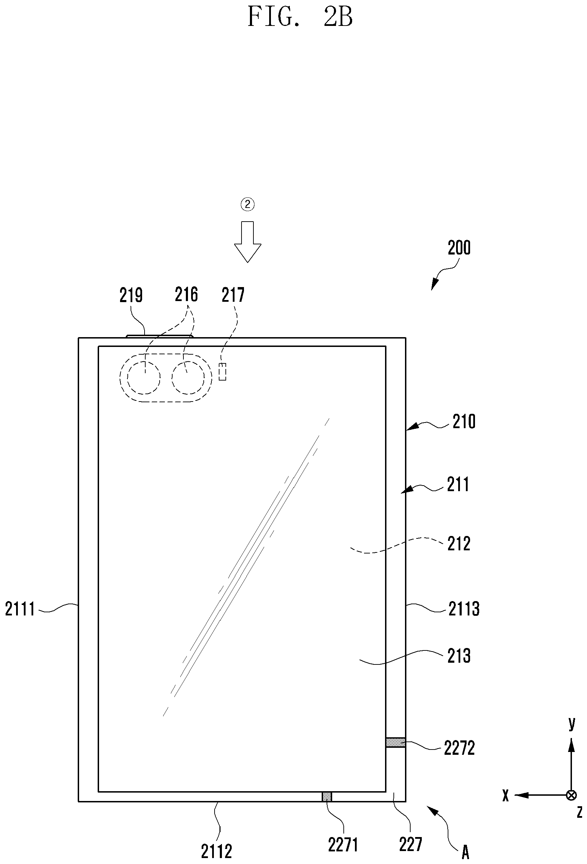

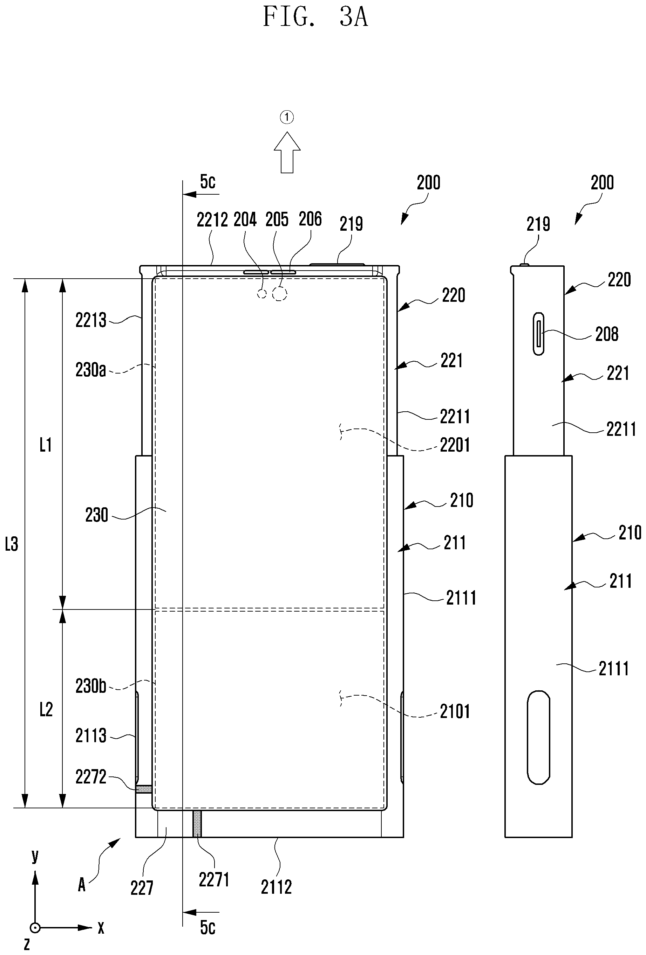

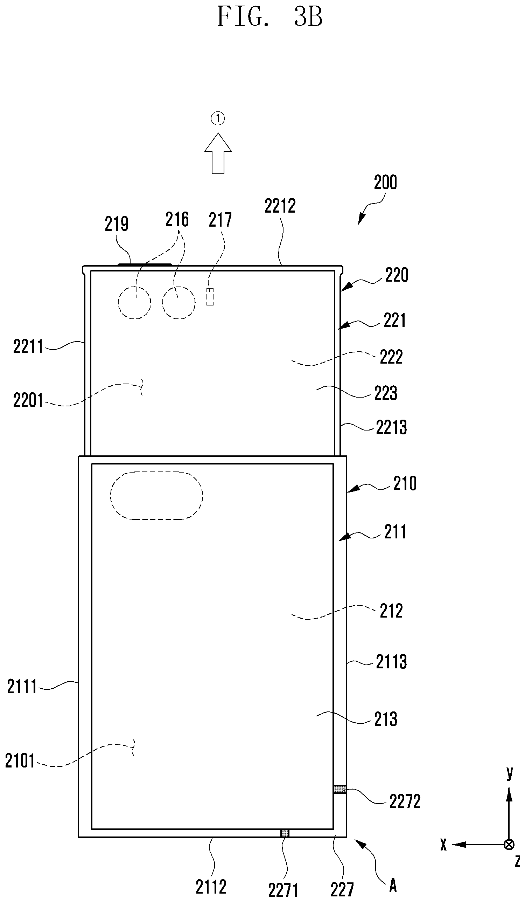

FIG. 2A and FIG. 2B are diagrams illustrating a front surface and a rear surface of an electronic device in a slide-in state according to various embodiments of the disclosure. FIG. 3A and FIG. 3B are diagrams illustrating a front surface and a rear surface of an electronic device in a slide-out state according to various embodiments of the disclosure.

An electronic device 200 illustrated in FIG. 2A to FIG. 3B may be at least partially similar to the electronic device 101 in FIG. 1, or may further include other embodiments of the electronic device. Likewise, components described with regard to FIG. 1 are not necessarily required in the embodiments of FIG. 2A to FIG. 3B.

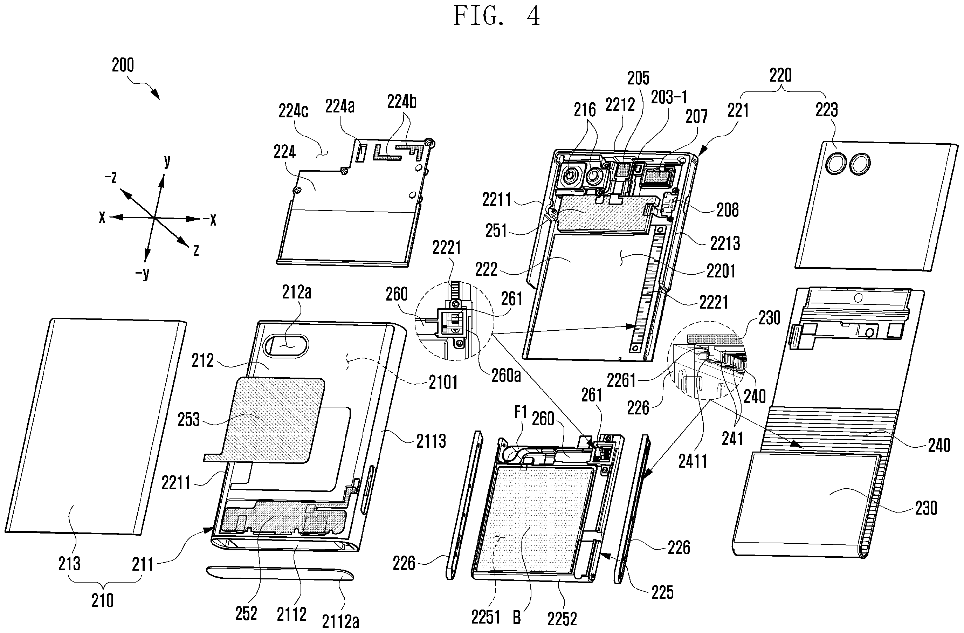

Referring to FIG. 2A to FIG. 3B, the electronic device 200 may include a first housing 210, a second housing 220 coupled to the first housing 210 to be slidable in a designated direction (e.g., direction CD or direction (2)) (e.g. ± y-axis direction) therefrom, and a flexible display 230 (e.g., a rollable display, an expandable display, or a stretchable display) disposed to be supported by at least a part of the first housing 210 and the second housing 220. In an embodiment, the second housing 220 may be slidably coupled to the first housing 210 so as to be ejected in a first direction (direction CD) or introduced in a second direction (direction (2)) opposite to the first direction (direction CD) with respect to the first housing 210. In an embodiment, at least a part of the second housing 220 is accommodated in at least a part of a first space 2101 configured by the first housing 210, whereby the electronic device 200 may be changed to a slide-in state. In an embodiment, at least a part of the second housing 220 is moved from the first space 2101 in an outward direction (e.g., direction CD), whereby the electronic device 200 may be changed to a slide-out state. In an embodiment, the electronic device 200 may include a support member (e.g., a support member 240 in FIG. 4) (e.g., a bendable member, a bendable support member, a multi-joint hinge module, or a multi-bar assembly) that at least partially configures the same plane as that of at least a part of the second housing 220 in a slide-out state, and is at least partially bent and accommodated into the first space 2101 of the first housing 210 in a slide-in stat. In an embodiment, at least a part of the flexible display 230 may be attached to and disposed on at least a part of the second housing 220. In an embodiment, at least a part of the remaining part of the flexible display 230 may be attached to the support member 240 (e.g., the support member 240 in FIG. 4). In an embodiment, at least a part of the flexible display 230 may be, in a slide-in state, bent and accommodated into the first space 2101 of the first housing 210 while being supported by the support member (e.g., the support member 240 in FIG. 4), thereby being disposed not to be seen from the outside. For example, at least a part of the flexible display 230 may be rolled up inside the first housing 210 of the electronic device 200. In an embodiment, at least a part of the flexible display 230 may be, in a slide-out state, disposed to be seen visually from the outside while being supported by the support member (e.g., the support member 240 in FIG. 4) at least partially configuring the same plane as that of the second housing 220.

According to various embodiments, the electronic device 200 may include the first housing 210 including a first lateral member 211, and the second housing 220 including a second lateral member 221. In an embodiment, the first lateral member 211 may include a first lateral surface 2111 having a first length in the first direction (e.g., y-axis direction), a second lateral surface 2112 extending from the first lateral surface 2111 in a substantially perpendicular direction (e.g., x-axis direction) and having a second length shorter than the first length, and a third lateral surface 2113 having the first length and extending from the second lateral surface 2112 to be substantially parallel to the first lateral surface 2111. In an embodiment, the first lateral member 211 may be at least partially made of a conductive member (e.g., metal). In an embodiment, the first lateral member 211 may be made of a combination of a conductive member and a non-conductive member (e.g., polymer). In an embodiment, the first housing 210 may include a first extension member 212 extending from at least a part of the first lateral member 211 to at least a part of the first space 2101. According to an embodiment, the first expansion member 212 may be integrated with the first lateral member 211. In an embodiment, the first expansion member 212 may be configured separately from the first lateral member 211 or may be structurally coupled to the first lateral member 211.

According to various embodiments, the second lateral member 221 may include a fourth lateral surface 2211 at least partially corresponding to the first lateral surface 2111 and having a third length, a fifth lateral surface 2212 extending from the fourth lateral surface 2211 in a direction substantially parallel to the second lateral surface 2112 and having a fourth length shorter than the third length, and a sixth lateral surface 2213 having the third length and extending from the fifth lateral surface 2212 to correspond to the third lateral surface 2113. In an embodiment, the second lateral member 221 may be at least partially made of a conductive member (e.g., metal). In an embodiment, the second lateral member 221 may be made of a combination of a conductive member and a non-conductive member (e.g., polymer). In an embodiment, at least a part of the second lateral member 221 may include a second expansion member 222 extending up to at least a part of a second space 2201 of the second housing 220. In an embodiment, the second expansion member 222 may be integrated with the second lateral member 221. In an embodiment, the second expansion member 222 may be configured separately from the second lateral member 221 or may be structurally coupled to the second lateral member 221.

According to various embodiments, the first lateral surface 2111 and the fourth lateral surface 2211 may be coupled to be slidable with respect to each other. In an embodiment, the third lateral surface 2113 and the sixth lateral surface 2213 may be likewise coupled to be slidable with respect to each other. In an embodiment, in a slide-in state, the fourth lateral surface 2211 may overlap with the first lateral surface 2111 (e.g., in an x-direction), thereby not being substantially seen from the outside. In an embodiment, in a slide-in state, the sixth lateral surface 2213 may overlap with the third lateral surface 2113 (e.g., in the x-direction), thereby not being substantially seen from the outside. In an embodiment, at least a part of the fourth lateral surface 2211 and the sixth lateral surface 2213 may be, in a slide-in state, arranged to be at least partially visible from the outside. In an embodiment, in a slide-in state, the second expansion member 222 may overlap with the first expansion member 212, thereby not being substantially seen from the outside. In an embodiment, the second expansion member 222 may be, in a slide-in state, disposed to be at least partially visible from the outside. For example, an upper portion of the second expansion member 222 corresponding to a region of the fifth lateral surface 2212 may be visible only.

According to various embodiments, the first housing 210 may include a first rear cover 213 coupled to at least a part of the first lateral member 211. In an embodiment, the first rear cover 213 may be coupled to and disposed on at least a part of the first expansion member 212. In an embodiment, the first rear cover 213 may be integrated with the first lateral member 211. In an embodiment, the first rear cover 213 may be made of polymer, coated or colored glass, ceramic, metal (e.g., aluminum, stainless steel (STS), or magnesium), or a combination of two or more of these materials. In an embodiment, the first rear cover 213 may extend up to at least a part of the first lateral member 211. In an embodiment, the first rear cover 213 may be omitted and at least a part of the first expansion member 212 may substitute for the first rear cover 213.

According to various embodiments, the second housing 220 may include a second rear cover 223 coupled to at least a part of the second lateral member 221. In an embodiment, the second rear cover 223 may be coupled to and disposed on at least a part of the second expansion member 222. In an embodiment, the second rear cover 223 may be integrated with the second lateral member 221. In an embodiment, the second rear cover 223 may be made of polymer, coated or colored glass, ceramic, metal (e.g., aluminum, stainless steel (STS), or magnesium), or a combination of two or more of these materials. In an embodiment, the second rear cover 223 may extend up to at least a part of the second lateral member 221. In an embodiment, the second rear cover 223 may be omitted and at least a part of the second expansion member 222 may substitute for the second rear cover 223.

According to various embodiments, the flexible display 230 may include a first part 230a (e.g., a planar part) always seen from the outside, and a second part 230b (e.g., a flexible part or bending part) that extends from the first part 230a and is at least partially bent and accommodated into the first space 2101 of the first housing 210 so as not to be seen from the outside in a slide-in state. In an embodiment, the first part 230a may be disposed to be supported by the second housing 220, and the second part 230b may be disposed to be at least partially supported by the support member (e.g., the support member 240 in FIG. 4). In an embodiment, the second part 230b of the flexible display 230 may be disposed to configure a plane substantially identical to that of the first part 230a and be visible from the outside while being supported by the support member (e.g., the support member 240 in FIG. 4) in a state where the second housing 220 has been slid out in the first direction (direction CD). However, the second part 230b of the flexible display 230 may also be disposed to configure a plane smaller or larger than that of the first part 230a. In an embodiment, the second part 230b of the flexible display 230 may be disposed to be bent and accommodated in the first space 2101 of the first housing 210 and not to be seen from the outside in a state where the second housing 220 has been slid in along the second direction (direction (2)). Therefore, the flexible display 230 may have a display area that is changed according to the second housing 220 being slid from the first housing 210 in a designated direction (e.g., ±y-axis direction). In the slide-out state, the second part 230b of the flexible display 230 may occupy the area, which is occupied by the first part 203a of the flexible display 230 in the slide-in state.

According to various embodiments, the flexible display 230 may have a length in the first direction (direction CD), which is changed according to sliding of the second housing 220 that is moved with respect to the first housing 210. For example, the flexible display 230 may have a first display area (e.g., a region corresponding to the first part 230a) corresponding to a first length L1 in a slide-in state. In an embodiment, the flexible display 230 may, in a slide-out state, be expanded to have a second display area (e.g., a region including the first part 230a and the second part 230b) which corresponds to a third length L3 greater than the first length L1 and is greater than the first display area according to sliding of the second housing 220 additionally moved by a second length L2 with respect to the first housing 210. In other words, the visible display area is increased due to the sliding-out of the second housing 220.

According to various embodiments, the electronic device 200 may include at least one of an input device (e.g., a microphone 203-1), a sound output device (e.g., a call receiver 206 and/or a speaker 207), sensor modules 204 and 217, a camera module (e.g., a first camera module 205 or a second camera module 216), a connector port 208, a key input device 219, or an indicator (not illustrated), which are arranged in the second space 2201 of the second housing 220. In an embodiment, the electronic device 200 may include another input device (e.g., a microphone 203) disposed in the first housing 210. In an embodiment, the electronic device 200 may be configured to omit at least one of the above elements or additionally include other elements. Hence, none of the aforementioned components may be considered essential for the operation of the electronic device 200. In an embodiment, at least one of the above elements may be disposed in the first space 2101 of the first housing 210.

According to various embodiments, the input device may include the microphone 203-1. In an embodiment, the input device (e.g., the microphone 203-1) may include multiple microphones arranged to be able to detect the direction of sound. The sound output device may include, for example, the call receiver 206 and the speaker 207. In an embodiment, the speaker 207 may meet the outside through at least one speaker hole disposed on the second housing 220 at a position (e.g., the fifth lateral surface 2212) always exposed to the outside regardless of a slide-in/slide-out state. In an embodiment, the connector port 208 may meet the outside through a connector port hole disposed on the second housing 220 in a slide-out state. In an embodiment, the connector port 208 may also meet the outside through an opening disposed on the first housing 210 to correspond to the connector port hole, in a slide-in state. In an embodiment, the call receiver 206 may include a speaker (e.g., a piezo speaker) that is operated without a separate speaker hole.

According to various embodiments, the sensor modules 204 and 217 may generate an electrical signal or a data value corresponding to an internal operation state or an external environment state of the electronic device 200. In an embodiment, the sensor modules 204 and 217 may include, for example, the first sensor module 204 (e.g., a proximity sensor or an illuminance sensor) disposed at a front surface of the electronic device 200, and/or the second sensor module 217 (e.g., a heart rate monitoring (HRM) sensor) disposed at a rear surface of the electronic device 200. In an embodiment, the first sensor module 204 may be disposed under the flexible display 230 at the front surface of the electronic device 200. In an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include the first camera module 205 disposed at the front surface of the electronic device 200, and the second camera module 216 disposed at the rear surface of the electronic device 200. In an embodiment, the electronic device 200 may include a flash (not illustrated) positioned near the second camera module 216. In an embodiment, the camera modules 205 and 216 may include one or multiple lenses, an image sensor, and/or an image signal processor. In an embodiment, the first camera module 205 may be disposed under the flexible display 230, and may be configured to capture an image of a subject through a part of an activation region (e.g., a display region) of the flexible display 230.

According to various embodiments, the first camera module 205 among the camera modules and some sensor modules 204 among the sensor modules 204 and 217 may be arranged to detect an external environment through the flexible display 230. For example, the first camera module 205 and some sensor modules 204 may be arranged to come into contact with an external environment through a perforated opening or a transmission region disposed on the flexible display 230 in the second space 2201 of the second housing 220. In an embodiment, a region facing the first camera module 205 of the flexible display 230 is a part of an activation region displaying contents, and may be configured as a transmission region having a designated transmissivity. In an embodiment, the transmission region may be configured to have a transmissivity within a range of about 5% to 20%. Such a transmission region may include a region overlapping with a valid region (e.g., an angle-of-view region) of the first camera module 205, through which light arriving at an image sensor to generate an image passes. For example, the transmission region of the flexible display 230 may include a region having a pixel arrangement density and/or a wire density lower than the surrounding region. For example, the transmission region may be replaced with the above opening. For example, some camera modules 205 may include an under display camera (UDC). In an embodiment, some sensor modules 204 may be disposed to perform a function thereof without being visually exposed through the flexible display 230 in the second space 2201 of the second housing 220.

According to various embodiments, the electronic device 200 may include at least one antenna element (e.g., an antenna element 224b in FIG. 4) electrically connected to a wireless communication circuit (e.g., the wireless communication module 192 in FIG. 1) disposed in an inner space (e.g., the second space 2201 of the second housing 220). In an embodiment, the electronic device 200 may include a bezel antenna A placed through at least a part of the conductive first lateral member 211 of the first housing 210. For example, the bezel antenna A may include a conductive part 227 (e.g., a conductive member) placed through at least a part of the second lateral surface 2112 and the third lateral surface 2113 of the first lateral member 211, and electrically separated by at least one partitioning part 2271 and 2272 made of a non-conductive material (e.g., polymer). In an embodiment, the wireless communication circuit (e.g., the wireless communication module 192 in FIG. 1) may be configured to transmit or receive a wireless signal through the conductive part 227 in at least one designated frequency band (e.g., about 600MHz-9000 MHz) (e.g., legacy band or NR band). In an embodiment, the electronic device 200 may include a lateral cover 2112a disposed on the second lateral surface 2112 so as to cover at least a part of the at least one partitioning part 2271. In an embodiment, the bezel antenna A may be disposed on at least one lateral surface among the first lateral surface 2111, the second lateral surface 2112, or the third lateral surface 2113. In an embodiment, the bezel antenna A may be disposed on at least one lateral surface among the fourth lateral surface 2211, the fifth lateral surface 2212, or the sixth lateral surface 2213 of the second housing 220. In an embodiment, the electronic device 200 may further include at least one antenna module (e.g., an mmWave antenna module or an mmWave antenna structure) disposed in an inner space (e.g., the first space 2101 or the second space 2201) to transmit or receive a wireless signal through another wireless communication circuit (e.g., the wireless communication module 192 in FIG. 1) in frequency band within a range of about 3 GHz-100 GHz.

According to various embodiments, a sliding-in/sliding-out operation of the electronic device 200 may be automatically performed. For example, the sliding-in/sliding-out operation of the electronic device 200 may be performed through gear coupling between a drive motor (e.g., a drive motor 260 in FIG. 4) including a pinion gear (e.g., a pinion gear 261 in FIG. 4) disposed in the first space 2101 of the first housing 210, and a rack gear (e.g., a rack gear 2221 in FIG. 4) disposed in the second space 2201 of the second housing 220 and gear-coupled to the pinion gear 261. In an embodiment, the drive motor 260 including the pinion gear 260 may be disposed in the second space 2201 of the second housing 220, and the rack gear 2221 coupled to the pinion gear 261 may be disposed in the first space 2101 of the first housing 210. For example, in a case where a triggering operation for changing from a slide-in state to a slide-out state or changing from a slide-out state to a slide-in state is detected, a processor (e.g., the processor 120 in FIG. 1) of the electronic device 200 may operate the drive motor (e.g., the drive motor 260 in FIG. 4) disposed in the electronic device 200. In an embodiment, the triggering signal may include a signal caused by selection (e.g., touch) of an object displayed on the flexible display 230, or a signal caused by manipulation of a physical button (e.g., key button) included in the electronic device 200. In an embodiment, a sliding-in/sliding-out operation of the electronic device 200 may be manually performed through a user's manipulation. For example, a user may pull the second housing 220 with respect to the first housing 210, thereby increasing a visible area of the flexible display 230.

According to various embodiments, the electronic device 200 may have a structure in which the second housing 220 is slid in and/or slid out with respect to the first housing 210 along a lengthwise direction (e.g., vertical direction) (e.g., ±y-axis direction) of the electronic device 200, but is not limited thereto. For example, the electronic device 200 may also have a structure in which the second housing 220 is slid in and/or slid out with respect to the first housing 210 along a widthwise direction (e.g., horizontal direction) (e.g., ±x-axis direction) perpendicular to the lengthwise direction of the electronic device 200. In an embodiment, the electronic device 200 may also be configured such that the length of the second lateral surface 2112 of the first housing 210 is greater than that of the first lateral surface 2111. In this case, correspondingly thereto, the length of the fifth lateral surface 2212 of the second housing 220 may also be greater than that of the fourth lateral surface 2211.

FIG. 4 is an exploded perspective view of an electronic device according to various embodiments of the disclosure.

In describing the electronic device 200 in FIG. 4, the same signs are assigned to elements substantially identical to those of the electronic device 200 in FIG. 2A to FIG. 3B, and a detailed description thereof may be omitted.

Referring to FIG. 4, the electronic device 200 may include the first housing 210 including the first space 2101, the second housing 220 coupled to the first housing 210 so as to be slidable therefrom and including the second space 2201, the support member 240 fixed to at least a part of the second housing 220 and at least partially bendably accommodated in the first space 2101 according to a slide-in operation, the flexible display 230 disposed to be supported by the second housing 220 and at least a part of the support member 240, and a drive module (e.g., a drive mechanism) that drives the second housing 220 from the first housing 210 in a slide-in direction (e.g., -y-axis direction) and/or a slide-out direction (e.g., y-axis direction). In an embodiment, the first housing 210 may include the first lateral member 211 and the first rear cover 213 coupled to at least a part (e.g., at least a part of the first expansion member 212) of the first lateral member 211. In an embodiment, the second housing 220 may include the second lateral member 221 and the second rear cover 223 coupled to at least a part (e.g., at least a part of the second expansion member 221) of the second lateral member 221. In an embodiment, the drive module may include the drive motor 260 disposed in the first space 2101 and including the pinion gear 261, and the rack gear 2221 disposed in the second space 2201 to be gear-coupled to the pinion gear 261. In an embodiment, the drive module may further include a speed reduction module (e.g., a speed reduction gear assembly) disposed to be coupled to the drive motor 260 to reduce a rotation speed and increase a driving force. In an embodiment, the drive motor 260 may be disposed to be supported by a motor bracket 260a disposed on a support bracket 225 disposed in the first space 2101 of the first housing 210. In an embodiment, the drive motor 260 may be fixed to, in the first space 2101, an end part (e.g., edge) of the support bracket 225 in a slide-out direction (e.g., y-axis direction). In an embodiment, the rack gear 2221 may be fixed to and disposed on the second expansion part 222 of the second housing 220. In an embodiment, the rack gear 2221 may be injection-molded on a part of the second expansion member 222, thereby being integrated therewith. In an embodiment, the rack gear 2221 may be disposed to have a length in a direction parallel to a sliding direction (e.g., ±y-axis direction). Therefore, when the electronic device 200 is assembled, the pinion gear 261 may be maintained to be gear-coupled to the rack gear 2221, and when a driving force of the drive motor 260 is provided to the pinion gear 261, the pinion gear is moved while riding on the rack gear 2221, whereby the second housing 220 may be moved with respect to the first housing 210. In an embodiment, a sliding distance of the second housing 220 may be determined by the length of the rack gear 2221.

According to various embodiments, the electronic device 200 may include multiple electronic components arranged in the second space 2201. In an embodiment, the multiple electronic components may include a first substrate 251 (e.g., main substrate), and the camera module 216, the speaker 207, the connector port 208, and the microphone 203-1 which are arranged around the first substrate 251. In an embodiment, the multiple electronic components may be arranged around the first substrate 251 in the second space 2201 of the second housing 220, and thus may be efficiently electrically connectable. In an embodiment, at least one of the above multiple electronic components may be disposed in the first space 2101 of the first housing 210.

According to various embodiments, the electronic device 200 may include a rear bracket 224 disposed between the second expansion member 222 and the second rear cover 223 in the second housing 220. In an embodiment, the rear bracket 224 may be disposed to cover at least a part of the multiple electronic components. In an embodiment, the rear bracket 224 may be structurally coupled to at least a part of the second expansion member 222. In an embodiment, the rear bracket 224 may be omitted. In an embodiment, the rear bracket 224 may be disposed to cover the multiple electronic components and support the second rear cover 223. In an embodiment, the rear bracket 224 may include an opening 224a (e.g., a through hole) or a notch region 224c (e.g., a cut part) disposed in a region corresponding to the camera module 216 and/or a sensor module (e.g., the sensor module 217 in FIG. 3B). In an embodiment, the rear bracket 224 may include the at least one antenna element 224b. In an embodiment, the at least one antenna element 224b may be disposed on an outer surface in a case where the rear bracket 224 is formed as an injection-molded object (e.g., an antenna carrier) made of a dielectric material. In an embodiment, the at least one antenna element 224b may include a laser direct structuring (LDS) antenna pattern disposed on the outer surface of the rear bracket 224. In an embodiment, the at least one antenna element 224b may include a conductive plate attached to the outer surface of the rear bracket 224, or a conductive paint or a conductive pattern disposed on the outer surface. In an embodiment, the at least one antenna element 224b may be mounted in the rear bracket 224 when the rear bracket is injection-molded. In an embodiment, the at least one antenna element 224b may be electrically connected to a wireless communication circuit (e.g., the wireless communication module 192 in FIG. 1) disposed on the first substrate 251, so as to be configured to transmit or receive a wireless signal in a designated frequency band (e.g., legacy band). In an embodiment, the camera module 216 and/or the sensor module 217 may be disposed to detect an external environment through the opening 224a or the notch region 224c. In an embodiment, a region of the second rear cover 223 corresponding to at least the camera module 216 and/or the sensor module 217 may be processed to be transparent. In an embodiment, the second rear cover 223 may include a through hole disposed on the region corresponding to at least the camera module 216 and/or the sensor module 217. In this case, the through hole may be covered by a transparent window. In an embodiment, the camera module 216 and/or the sensor module 217 may also be configured to operate only in a slide-out state of the electronic device 200.

According to various embodiments, the electronic device 200 may include the support bracket 225 disposed in the first space 2101 in the first housing 210. In an embodiment, the support bracket 225 may include a support part 2252 disposed at one end thereof and having a curved outer surface to support a back surface of the support member 240 that is bent during a sliding operation transitioning from a slide-out state to a slide-in state. In an embodiment, the support bracket 225 may include a support structure for supporting and fixing the drive motor 260 by means of the motor bracket 260a. In an embodiment, the support bracket 225 may include a battery seating part 2251 for accommodating a battery. In an embodiment, the drive motor 260 may be disposed on an endmost part (e.g., edge) of the support bracket 225 in a slide-out direction (e.g., y-axis direction). For example, when assembling of the electronic device 200 is completed, the drive motor 260 may be disposed at a position closest to the first substrate 251 among the electronic components arranged in the first housing 210, so as to assist in minimizing the size and/or length of a flexible substrate F1 (e.g., a flexible substrate (a flexible printed circuit board (FPCB))) electrically connecting the first substrate 251 and the drive motor 260. In an embodiment, the electronic device 200 may include a pair of guide rails 226 arranged on both lateral surfaces of the support bracket 225 to guide both ends of the support member 240 in a sliding direction.

According to various embodiments, the first housing 210 may include an opening 212a (e.g., a through hole) disposed on the first expansion member 212 in a region corresponding to the camera module 216 and/or the sensor module 217 disposed in the second housing 220, when the electronic device 200 is in a slide-in state. In an embodiment, the camera module 216 and/or the sensor module 217 may detect an external environment through the opening 212a disposed on the first housing 210, when the electronic device 200 is in a slide-in state. In an embodiment, a region of the first rear cover 213 corresponding to the camera module 216 and/or the sensor module 217 may be processed to be transparent.

According to various embodiments, the electronic device 200 may include a second substrate 252 (e.g., a sub substrate) and an antenna member 253 disposed between the first expansion member 212 and the first rear cover 213 in the first housing 210. In an embodiment, the second substrate 252 and the antenna member 253 may be arranged on at least a part of the first expansion member 212. In an embodiment, the second substrate 252 and the antenna member 253 may be electrically connected to the first substrate 251 through at least one electrical connection member (e.g., a flexible printed circuit board (FPCB) or a flexible RF cable (FRC)). In an embodiment, the antenna member 253 may include a multi-function coil (or a multi-function core, MFC) for performing a wireless charging function, a near field communication (NFC) function, and/or an electronic payment function. In an embodiment, the antenna member 253 may be electrically connected to the second substrate 252, thereby being electrically connected to the first substrate 251 through the second substrate 252. In an embodiment, the second substrate 252 and/or the antenna member 253 may be electrically connected to the first substrate 251 through at least a part of the flexible substrate F1 connecting the drive motor 260 and the first substrate 251.

According to various embodiments, the support member 240 may be guided through the guide rails 226 during a slide-in/slide-out operation. In an embodiment, the support member 240 may include a plurality of multi-bars 241 coupled to be rotatable with respect to each other, and guide protrusions 2411 protruding from both ends of each of the multi-bars 241. In an embodiment, the guide rail 226 may include a guide slit 2261 disposed at a position corresponding to a movement trajectory of the support member 240. In an embodiment, when the support member 240 attached and fixed to a back surface of the flexible display 230 is movably coupled to the guide rails 226, the guide protrusions 2411 may be moved along the guide slits 2611, thereby assisting in reducing escaping or transformation of the flexible display 230 being operated.

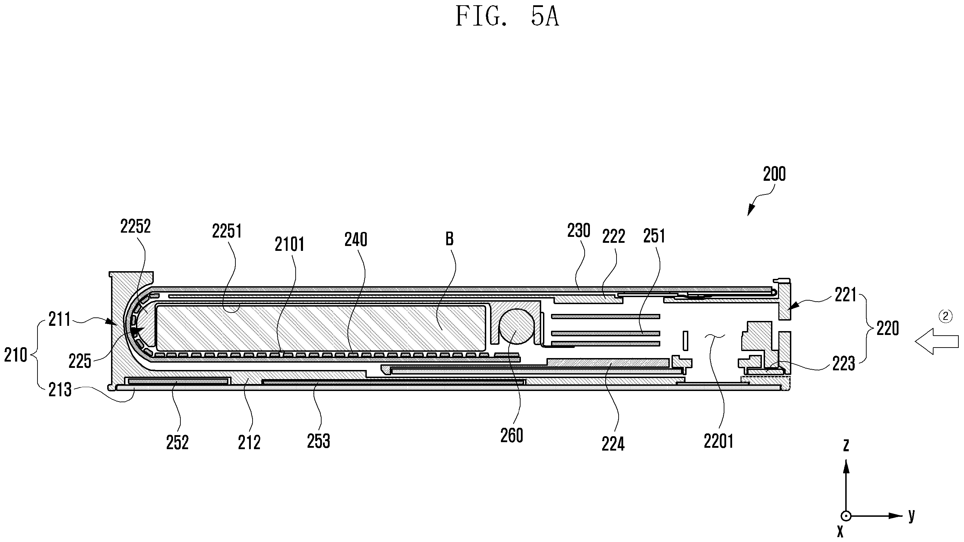

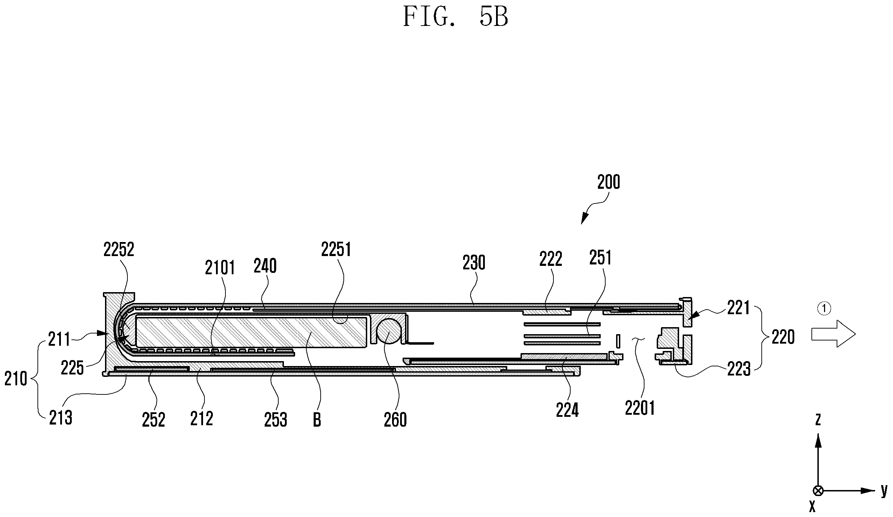

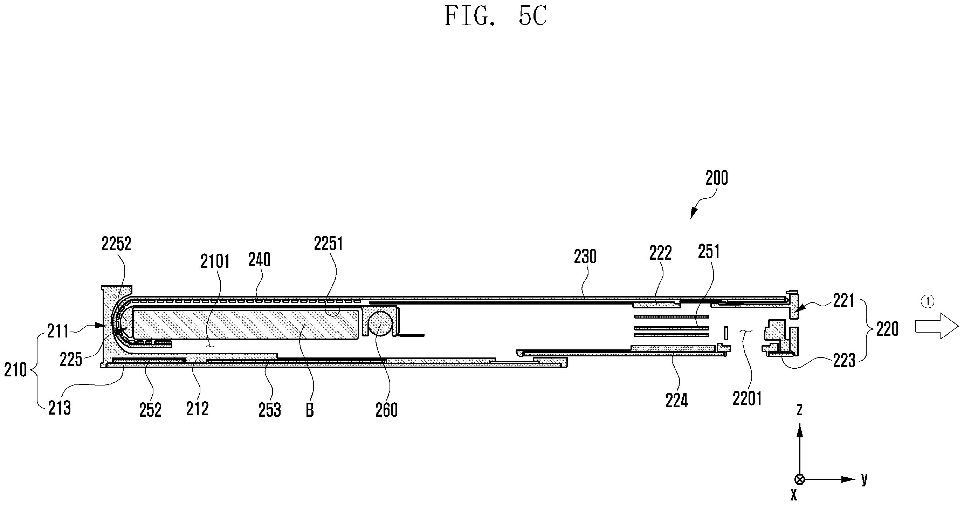

FIG. 5A is a sectional view of an electronic device taken along vertical line 5a-5a in FIG. 2A according to various embodiments of the disclosure. FIG. 5B is a sectional view of an electronic device in an intermediate state according to various embodiments of the disclosure. FIG. 5C is a sectional view of an electronic device taken along vertical line 5c-5c in FIG. 3A according to various embodiments of the disclosure.

In describing the electronic device 200 in FIG. 5A to FIG. 5C, the same signs are assigned to elements substantially identical to those of the electronic device 200 in FIG. 4, and a detailed description thereof may be omitted.

Referring to FIG. 5A to FIG. 5C, the electronic device 200 may include the first housing 210 having the first space 2101, the second housing 220 having the second space 2201, the support member 240 connected to the second housing 220 and at least partially accommodated in the first space 2101 in a slide-in state, the flexible display 230 disposed to be supported by at least a part of the second housing 220 and at least a part of the support member 240, and the drive motor 260 disposed in the first space 2101 and including a pinion gear (e.g., the pinion gear 261 in FIG. 4) gear-coupled to a rack gear (e.g., the rack gear 2221 in FIG. 4) in the second space 2201. In an embodiment, the drive motor 260 may automatically move the second housing 220 with respect to the first housing 210 in a slide-in direction (direction (2)) or a slide-out direction (direction CD) through gear coupling between the pinion gear (e.g., the pinion gear 261 in FIG. 4) and the rack gear 2221 (e.g., the rack gear 2221 in FIG. 4).

According to various embodiments, at least a part of the second housing 220 may be accommodated in the first space 2101 of the first housing 210 in a slide-in state (e.g., a state of FIG. 5A) of the electronic device 200. In an embodiment, at least a part of the flexible display 230 may be bent and accommodated in the first space 2101 together with the support member 240, thereby being disposed not to be seen from the outside. In this case, a first display area (e.g., a display region corresponding to the first part 230a in FIG. 3A) of the flexible display 230 may be exposed to the outside.

According to various embodiments, the electronic device 200 may control driving of the drive motor 260, thereby transitioning from an intermediate state (a state of FIG. 5B) to a slide-out state (a state of FIG. 5C). In an embodiment, the electronic device 200 may be configured to stop in a designated intermediate state between a slide-in state and a slide-out state (a free-stop function). In other words, the visible area of the flexible display 230 may be gradually adjusted. However, it may also be possible that the visible area of the flexible display 230 may correspond to pre-defined steps. In an embodiment, the electronic device 200 may transition to a slide-in state, an intermediate state, or a slide-out state through a user's manipulation while a driving force is not provided to the drive motor 260. Hence, the visible area of the flexible display 230 may be adjusted manually.

According to various embodiments, at least a part of the second housing 220 may transition to, through driving of the drive motor 260, a slide-out state in which the second housing is at least partially moved from the first housing 210 to the outside along the first direction (direction CD). In an embodiment, the flexible display 230 may, in a slide-out state (the state of FIG. 5C) of the electronic device 200, move together with the support member 240 while being supported by the support bracket 225, whereby a part having been slid in the first space 2101 is at least partially exposed to be externally visible. In this case, a second display area (e.g., a display region including the first part 230a and the second part 230b of FIG. 3A) more expanded than a first display area of the flexible display 230 may be exposed to the outside.

According to various embodiments, the electronic device 200 may include a battery B disposed in the battery seating part 2251 of the support bracket 225 fixed to the first space 2101 of the first housing 210. In an embodiment, the battery B is disposed in the first housing 210 and may not require a separate drive gap for avoiding interference with surrounding structures according to movement. Therefore, the thickness of the battery B may be expanded in a manner of becoming close to or coming into contact with a back surface of the support member 240 from the battery seating part 2251 of the support bracket 225, whereby the battery has a relatively increased volume and supports the moving support member 240, so that sagging of the flexible display 230 may be reduced and operational reliability may be improved.

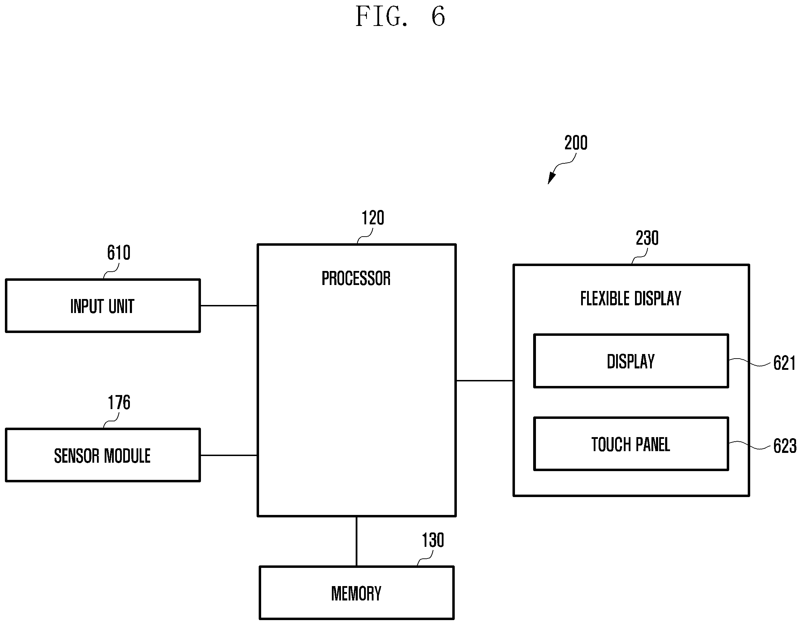

FIG. 6 is a block diagram roughly illustrating a configuration of an electronic device including a flexible display according to an embodiment of the disclosure.

According to an embodiment, the electronic device 200 disclosed below may include embodiments described for the electronic device 101 in FIG. 1 and/or the electronic device 200 in FIG. 2A to FIG. 5C. According to various embodiments, embodiment related to the electronic device 200 disclosed below may be integrated with or applied to embodiments described for the electronic device 101 in FIG. 1 and/or the electronic device 200 in FIG. 2A to FIG. 5C. In the following description, the same reference numerals may be assigned to elements substantially the same as those in the embodiments described with reference to FIG. 1 to FIG. 5C, and overlapped description may be omitted. A configuration of the electronic device 200 described with reference to FIG. 6 may be substantially identically applied to the embodiments of the electronic device 200 described below.

According to an embodiment, in embodiments related to the electronic device 200 according to the disclosure, a rollable type electronic device or a sliding type electronic device are described as an example. However, the disclosure is not limited thereto, and the embodiments may be substantially identically applied to various electronic devices including the flexible display 230 (e.g., a flexible display or an expandable display). In an embodiment, an example in which the second housing 220 of the electronic device 200 is slid in a vertical direction (e.g., y-axis direction) with respect to the first housing 210 is described. However, the disclosure is not limited thereto, and the embodiment may be substantially identically applied to embodiments in which the first housing 210 and the second housing 220 are slid in a horizontal direction (e.g., x-axis direction and/or -x-axis direction).

Referring to FIG. 6, the electronic device 200 according to an embodiment of the disclosure may include an input unit 610, a flexible display 230, a sensor module 176, a memory 130, and/or a processor 120. However, at least one of the aforementioned components may also be omitted (e.g., the sensor module 176).

According to various embodiments, the sensor module 176, the memory 130, and/or the processor 120 may be arranged on at least one of the first substrate 251 and the second substrate 252 described with reference to FIG. 4. The input unit 610, the flexible display 230, the sensor module 176, the memory 130, and/or the processor 120 may be operatively connected to each other.

According to an embodiment, the input unit 610 (e.g., a trigger signal input unit) may receive a signal input through at least one of a selection or touch operation, a long press operation, a double tap operation, a drag and drop operation, a swipe operation, and a tap operation performed by a user of the electronic device 200. The input unit 610 may transfer the received signal to the processor 120. The processor 120 may control a slide-in state, a slide-out state, and/or a fixed state of the flexible display 230, based on a signal (e.g., a trigger signal) transferred via the input unit 610. For example, the input unit 610 may input a trigger signal for driving the second housing 220 to be in a slide-out state and/or a slide-in state so as to expand and/or reduce the flexible display 230.

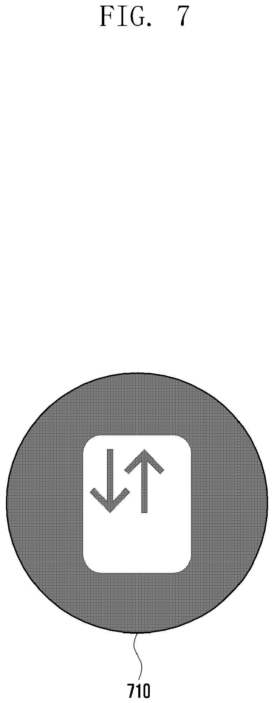

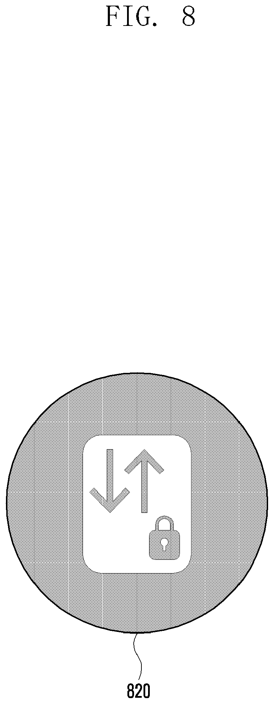

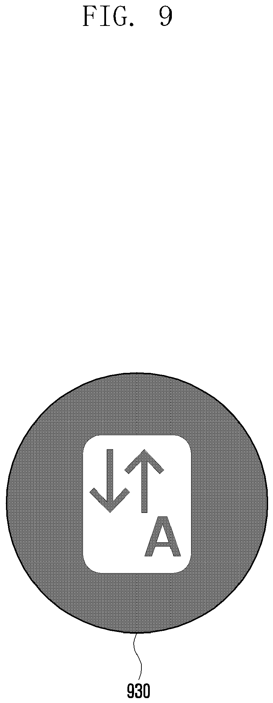

According to various embodiments, the input unit 610 may receive a trigger signal caused by a physical key, a software key, and/or a gesture. For example, the input unit 610 may include the key input device 219 described with reference to FIG. 2A to FIG. 3B. For example, the input unit 610 may receive a input signal (e.g., a trigger input signal) through a mode change icon displayed using the flexible display 230. In an embodiment, the mode change icon may include at least one of a first mode change icon 710 subsequently described with reference to FIG. 7, a second mode change icon 820 subsequently described with reference to FIG. 8, and a third mode change icon 930 subsequently described with reference to FIG. 9.

According to an embodiment, the flexible display 230 (e.g., rollable display) may display an initial screen, a configuration screen, and/or various applications of the electronic device 200. The flexible display 230 may provide a user interface (UI) enabling various services to be provided to a user of the electronic device 200. For example, the flexible display 230 may display a user interface, such as a quick menu, a lock screen menu, a configuration menu, a multi-window slit view, text, an image, a video, and/or a picture-in-picture (PIP) image which are required for operation of the electronic device 200.

According to an embodiment, the flexible display 230 may transfer information input by a user of the electronic device 200 to the processor 120. For example, the flexible display 230 may detect at least one of a selection or touch signal, a long press signal, a double tap signal, a drag and drop signal, a swipe signal, and a tap signal which are input through a user of the electronic device 200. The flexible display 230 may transfer, to the processor 120, the selection or touch signal, the long press signal, the double tap signal, the drag and drop signal, the swipe signal, or the tap signal which has been detected. In an embodiment, the processor 120 may control a slide-in state, a slide-out state, and/or a fixed state of the flexible display 230, based on a signal transferred via the flexible display 230. For example, the flexible display 230 may provide and display a notification (e.g., a pop-up) notifying of the state or situation of the electronic device 200.

According to various embodiments, at least one of a selection or touch signal, a long press signal, a double tap signal, a drag and drop signal, a swipe signal, and a tap signal which may be input via the flexible display 230 may be input via a finger of a user of the electronic device 200 or a stylus pen. A signal input and detected via the flexible display 230 may be transferred to the processor 120. When a user of the electronic device 200 selects or touches a mode change icon (e.g., the first mode change icon 710 described with reference to FIG. 7, the second mode change icon 820 described with reference to FIG. 8, or the third mode change icon 930 described with reference to FIG. 9) via the flexible display 230, the processor 120 may be configured to allow the electronic device 200 to switch from a slide-in state (e.g., slide-in mode) to a slide-out state (e.g., a slide-out mode), switch from a slide-out state (e.g., a slide-out mode) to a slide-in state (e.g., slide-in mode), or maintain a fixed state (e.g., a fixing mode, a second mode) in a slide-in state or slide-out state.

According to various embodiments, when the electronic device 200 is switched from a slide-in state to a slide-out state and thus the flexible display 230 is expanded, the first display region (e.g., the first part 230a in FIG. 3A) and the second display region (e.g., the second part 230b in FIG. 3A) of the flexible display 230 may be exposed to a user of the electronic device 200. In an embodiment, when the electronic device 200 is switched from a slide-out state to a slide-in state and thus the flexible display 230 is reduced, the first display region 230a of the flexible display 230 may be exposed to the outside of the electronic device 200 and the second display region 230b may not be exposed to the outside of the electronic device 200.

According to various embodiments, the flexible display 230 may perform a display function and an input function. The flexible display 230 may include a display 621 and a touch panel 623 to perform the display function and the input function. The display 621 may visually provide a menu of the electronic device 200, input data, function configuration information, and various pieces of information (e.g., user interface, icon, and/or application) to a user. The display 621 may include at least one of a liquid crystal display (LCD), organic light emitting diodes (OLED), and active matrix organic light emitting diodes (AMOLED). The touch panel 623 may include a pressure sensor or a touch sensor including capacitive overlay, resistive overlay, or infrared beam. The touch panel 623 may include various types of sensing means capable of contact or pressure by an object (finger or stylus pen) other than the sensors. The touch panel 623 may detect a selection or a touch (e.g., a finger or a stylus pen) of a user of the electronic device 200, and transfer a detected signal to the processor 120. The detected signal may include at least one of coordinate information, direction information, or touch angle information related to a touch input of a user of the electronic device 200.

According to an embodiment, the sensor module 176 may detect the state or situation of the electronic device 200, and transfer a detected signal to the processor 120. The sensor module 176 may monitor the state or situation of the electronic device 200. The sensor module 176 may sense whether the electronic device 200 is in a designated state (e.g., a state corresponding to a designated condition). For example, the sensor module 176 may include a geomagnetic sensor, an acceleration sensor, a direction sensor, an angular velocity sensor, a gyro sensor, a temperature sensor, a humidity sensor, and/or an illuminance sensor. In various embodiments, the sensor module 176 is not limited to the above sensors, and may also include a proximity sensor, a time-of-flight (TOF) sensor, an ultrasonic sensor, a fingerprint recognition sensor, a gesture sensor, an atmospheric pressure sensor, a magnetic sensor, a grip sensor, a color sensor, an infrared (IR) sensor, and/or a biometric sensor.

According to various embodiments, the state or situation of the electronic device 200 may be detected via the sensor module 176. For example, the state or situation of the electronic device 200 may be detected via at least one of a geomagnetic sensor, an acceleration sensor, a direction sensor, an angular velocity sensor, and a gyro sensor. In an embodiment, the sensor module 176 (e.g., a geomagnetic sensor, an acceleration sensor, a direction sensor, an angular velocity sensor, and/or a gyro sensor) may detect the movement of the electronic device 200. For example, the sensor module 176 (e.g., a geomagnetic sensor, an acceleration sensor, a direction sensor, an angular velocity sensor, and/or a gyro sensor) may detect the direction or direction change of the electronic device 200. For example, the sensor module 176 (e.g., a geomagnetic sensor, an acceleration sensor, a direction sensor, an angular velocity sensor, and/or a gyro sensor) may detect whether the flexible display 230 of the electronic device 200 has been flipped over toward the ground. For example, the sensor module 176 (e.g., a geomagnetic sensor, an acceleration sensor, a direction sensor, an angular velocity sensor, and/or a gyro sensor) may detect a physical quantity related to the movement of the electronic device 200, for example, at least one of the direction, the angular velocity, the acceleration, and the location of the electronic device 200. The sensor module 176 (e.g., a geomagnetic sensor, an acceleration sensor, a direction sensor, an angular velocity sensor, and/or a gyro sensor) may detect whether the flexible display 230 is in a slide-in state and/or a slide-out state. For example, the processor 120 may use the sensor module 176 (e.g., a geomagnetic sensor, an acceleration sensor, a direction sensor, an angular velocity sensor, and/or a gyro sensor) to, when the electronic device 200 has been flipped over toward the ground, control the electronic device 200 being switched from a slide-in state to a slide-out state or switched from a slide-out state to a slide-in state, so as to prevent damage to the flexible display 230. According to an embodiment, the processor 120 may identify that a case where the electronic device 200 having been flipped over toward the ground is a designated state (e.g., a state corresponding to a designated condition), by using the sensor module 176 (e.g., a geomagnetic sensor, an acceleration sensor, a direction sensor, an angular velocity sensor, and/or a gyro sensor).

According to various embodiments, the sensor module 176 (e.g., a temperature sensor) may detect whether the internal temperature of the electronic device 200 exceeds a designated temperature. For example, the processor 120 may detect a temperature caused by overload of a drive motor (e.g., the drive motor 260 in FIG. 4) of the electronic device 200 by using the temperature sensor, and control the electronic device 200 being switched from a slide-in state to a slide-out state or switched from a slide-out state to a slide-in state, so as to reduce damage to the drive motor 260. According to an embodiment, the processor 120 may identify that a case where the internal temperature of the electronic device 200 exceeding the designated temperature is a designated state (e.g., a state corresponding to a designated condition), by using the sensor module 176 (e.g., a temperature sensor).

According to various embodiments, the sensor module 176 (e.g., a humidity sensor) may detect moisture being detected from a connector port (e.g., the connector port 208 in FIG. 3A) of the electronic device 200. For example, when moisture is detected from the connector port 208 of the electronic device 200 by using the humidity sensor, the processor 120 may control the electronic device 200 being switched from a slide-in state to a slide-out state or switched from a slide-out state to a slide-in state, so as to prevent moisture from entering the connector port 208. According to an embodiment, the processor 120 may identify that a case where moisture being detected from the connector port 208 of the electronic device 200 is a designated state (e.g., a state corresponding to a designated condition), by using the sensor module 176 (e.g., a humidity sensor).

According to various embodiments, the sensor module 176 (e.g., an illuminance sensor) may detect whether the electronic device 200 is in a designated place (e.g., a closed place like a bag or pocket). For example, the processor 120 may use the illuminance sensor or the geomagnetic sensor to, when the electronic device 200 is in a closed space, control the electronic device 200 being switched from a slide-in state to a slide-out state or switched from a slide-out state to a slide-in state, so as to prevent damage to the flexible display 230. According to an embodiment, the processor 120 may identify that a case where the electronic device 200 being in a designated place (e.g., a closed place) is a designated state (e.g., a state corresponding to a designated condition), by using the sensor module 176 (e.g., illuminance sensor and/or the geomagnetic sensor).

According to various embodiments, the processor 120 may control a slide-in state and/or a slide-out state of the electronic device 200, based on a state or a situation such as the internal remaining power of a battery (e.g., the battery 189 in FIG. 1) of the electronic device 200, or whether the battery is being charged. According to an embodiment, the processor 120 may identify that a case where the electronic device 200 being charged is a designated state (e.g., a state corresponding to a designated condition).

According to various embodiments, the state or situation of the electronic device 200 may be detected via the processor 120. For example, the processor 120 may sense or detect whether the electronic device 200 is making a call (e.g., a voice call and/or a video call) or is running a navigation application, a health application, and/or a biometric recognition application. Such information can be particularly used to provide a protection in case of the electronic device being dropped. In an embodiment, the processor 120 may sense or detect whether the electronic device 200 makes a call (e.g., a voice call and/or a video call) or executes a navigation application, a health application, and/or a biometric recognition application. The processor 120 may control the electronic device 200 to be switched from a slide-in state to a slide-out state or switched from a slide-out state to a slide-in state according to whether the electronic device 200 is making a call (e.g., a voice call and/or a video call) or is running a navigation application, a health application, and/or a biometric recognition application, so as to reduce malfunction of the electronic device 200 or damage to the electronic device 200 caused by falling by a user. For example, the processor 120 may control a slide-in state, a slide-out state, and/or a fixed state of the electronic device 200 according to whether the electronic device 200 is making a call (e.g., a voice call and/or a video call) or is running a navigation application, a health application, and/or a biometric recognition application. According to an embodiment, the processor 120 may identify that a case where the electronic device 200 making a call (e.g., a voice call and/or a video call) or running a designated application (e.g., a navigation application, a health application, and/or a biometric recognition application) is a designated state (e.g., a state corresponding to a designated condition).

According to various embodiments, the designated state or the state corresponding to the designated condition may include a case where the electronic device 200 is making a call or is running a designated application, a case where the flexible display 230 has been flipped over toward the ground, a case where the internal temperature of the electronic device 200 exceeds the designated temperature, a case where moisture is detected from the connector port 208 of the electronic device 200, a case where the electronic device 200 is in a designated place, and/or a case where the electronic device 200 is being charged. Such information can be used to provide a protection in case of the electronic device being dropped or to prevent ingress of moisture. According to an embodiment, the designated state or the state corresponding to the designated condition may be identified based on state identification information of the second housing 220 relative to the first housing 210.

According to an embodiment, the memory 130 may store a mode change icon (e.g., the first mode change icon 710 described with reference to FIG. 7, the second mode change icon 820 described with reference to FIG. 8, or the third mode change icon 930 described with reference to FIG. 9) and a resource relating to a pop-up, an application, and/or various types of contents (text, images, videos, and/or files) used in the electronic device 200. The memory 130 may store at least one instructions related to a slide-in state (e.g., slide-in mode), a slide-out state (e.g., slide-out mode), and/or a fixed state (e.g., a fixing mode) of the electronic device 200. The memory 130 may store a configuration value related to a touch sensitivity, a touch region, a touch pressure, and/or a touch time for at least one of a selection or touch signal, a long press signal, a double tap signal, a drag and drop signal, a swipe signal, and a tap signal which are input via the input unit 610 and the flexible display 230. The memory 130 may store at least one user interface related to an initial screen and/or a configuration screen of the electronic device 200.

According to various embodiments, the memory 130 may perform a function of storing a program (e.g., the program 140 in FIG. 1) for processing and controlling the processor 120, an operating system (e.g., the operating system 142 in FIG. 1), various applications, and input/output data. The memory 130 may store a program for controlling overall operations of the electronic device 200. The memory 130 may store various configuration information required for processing a function in the electronic device 200. The memory 130 may store at least one executable instruction.

According to an embodiment, the processor 120 may be operatively connected to the input unit 610, the flexible display 230, the sensor module 176, and the memory 130. The processor 120 may be electrically connected to the input unit 610, the flexible display 230, the sensor module 176, and the memory 130. The processor 120 may control a function and an operation of the input unit 610, the flexible display 230, the sensor module 176, and the memory 130. The processor 120 may control a slide-in state, a slide-out state, and/or a fixed state of the flexible display 230 by using at least one of signals transferred via the trigger signal input unit 610 and the sensor module 176. The processor 120 may, for example, monitor whether the electronic device 200 is in a designated state or situation, by using the sensor module 176. The processor 120 may provide a trigger selection mode for controlling driving of a slide-in or slide-out state of the second housing 220, based on input of a trigger signal via the input unit 610. The processor 120 may provide a trigger selection mode for controlling a slide-out state, a slide-in state, and/or a fixed state of the second housing 220, based on input of a trigger signal via the input unit 610. For example, the trigger selection mode may be performed through at least one of the first mode change icon 710 described with reference to FIG. 7, the second mode change icon 820 described with reference to FIG. 8, and the third mode change icon 930 described with reference to FIG. 9.

According to an embodiment, the electronic device 200 may identify whether a condition of the electronic device 200 for disabling sliding in or sliding out of the second housing 220 is satisfied. The electronic device 200 may receive an input via the input unit 610(e.g., trigger signal input unit). The electronic device 200 may operate in a first mode in which slide-in or slide-out of the second housing 220 is controlled based on the input and the condition not being satisfied. The electronic device 200 may operate in the first mode in which slide-in or slide-out of the second housing 220 is disabled based on the condition being satisfied. The electronic device 200 may operate in a second mode in which the slide-in or slide-out of the second housing 220 is disabled regardless of the condition being satisfied or not.

According to an embodiment, the condition of the electronic device (200) for deactivating sliding in or sliding out of the second housing (220) is identified as being satisfied if the flexible display (230) of the electronic device (200) facing down. According to an embodiment, the condition of the electronic device (200) for deactivating sliding in or sliding out of the second housing (220) is identified as being satisfied if the electronic device (200) is placed in a pocket. According to an embodiment, the condition of the electronic device (200) for deactivating sliding in or sliding out of the second housing (220) is identified as being satisfied if a defined application is being executed. According to an embodiment, the condition of the electronic device (200) for deactivating sliding in or sliding out of the second housing (220) is identified as being satisfied if the electronic device (200) is being charged.

According to an embodiment, the trigger selection mode may include a fixing mode (e.g., a second mode) of not changing, by the processor 120, a slide-in or slide-out state of the second housing 220 when a trigger signal for driving the second housing 220 to be slid in or slid out is input. According to an embodiment, the trigger selection mode may include a display reduction or expansion mode (e.g., a third mode) of changing, by the processor 120, a slide-in or slide-out state of the second housing 220 to correspond to input of the trigger signal for driving the second housing 220 to be slid in or slid out. According to an embodiment, the trigger selection mode may include a smart mode (e.g., a first mode) of, when the trigger signal for driving the second housing 220 to be slid in or slid out is input, identifying, by the processor 120, the state of the second housing 220, and changing, by the processor 120, a slide-in or slide-out state of the second housing 220, based on state identification information of the second housing 220.

According to an embodiment, the processor 120 may identify the state (e.g., a state corresponding to a designated state or a designated condition) of the second housing 220 when a trigger signal for driving the second housing 220 to be slid in or slid out is input. The processor 120 may change a slide-in or slide-out state of the second housing 220, based on state identification information of the second housing 220. The state identification information of the second housing 220 may include information of identifying whether the second housing 220 is in a state corresponding to the designated state or designated condition with respect to the first housing 210.

According to an embodiment, the processor 120 may, in the smart mode, when the flexible display 230 is identified as having been flipped over toward the ground or being in a pocket, based on the state identification information of the second housing 220, control not to change a slide-in or slide-out state of the second housing 220.

According to an embodiment, the processor 120 may, in the smart mode, when the electronic device 200 is running a designated application or the electronic device 200 is being charged, control not to change a slide-in or slide-out state of the second housing 220. The electronic device 200 being charged may include the case that a wireless charging operation is performed. Such information can be used to prevent charge churn, for example.

According to an embodiment, the processor 120 may, in the smart mode, detect the internal temperature and/or moisture of the electronic device 200 by using the sensor module 176 and, when the internal temperature of the electronic device 200 exceeds a designated temperature or moisture is detected in the electronic device 200, control not to change a slide-in or slide-out state of the second housing 220. Such information can be used to prevent breakage of the drive motor 260 and/or moisture ingress.

According to an embodiment, in a case where the electronic device 200 is in a state corresponding to a designated condition, even if the trigger signal is input, the processor 120 may control the second housing 220 not to change a slide-in or slide-out state.

According to an embodiment, the processor 120 may be configured to configure a state change of the flexible display 230, based on at least one of a touch signal, a long press signal, a double tap signal, a drag and drop signal, a swipe signal, and a tap signal which are input via the input unit 610.

According to an embodiment, the processor 120 may be configured to, in the fixing mode (e.g., second mode), when the trigger signal is input via the input unit 610, allow the flexible display 230 to provide a pop-up message 1720 notifying that the fixing mode has been configured.

According to various embodiments, the processor 120 may perform a function of controlling overall operations of the electronic device 200 and the signal flows between internal elements, and processing data. The processor 120 may include, for example, a central processing unit (CPU), an application processor, and/or a communication processor. The processor 120 may include a single-core processor or a multi-core processor. The processor 120 may be configured by at least one processor. For example, the processor 120 may include an application processor (e.g., the main processor 121 in FIG. 1) and a sensor hub processor (e.g., the auxiliary processor 123 in FIG. 1). The sensor hub processor may be operatively connected to the sensor module 176 to perform various sensing via the sensor module 176 and transfer sensed information to the application processor.

FIG. 7 is a diagram roughly illustrating a first mode change icon used in an electronic device according to an embodiment of the disclosure. FIG. 8 is a diagram roughly illustrating a second mode change icon used in an electronic device according to an embodiment of the disclosure. FIG. 9 is a diagram roughly illustrating a third mode change icon used in an electronic device according to an embodiment of the disclosure.

According to an embodiment, the first mode change icon 710, the second mode change icon 820, and/or the third mode change icon 930 of the electronic device 200 may be selected by means of a configuration menu displayed via the flexible display 230 of the electronic device 200.

According to various embodiments, the first mode change icon 710, the second mode change icon 820, and/or the third mode change icon 930 may be changed or switched according to at least one selection or touch of a user of the electronic device 200 using the flexible display 230 and/or the trigger signal input unit 610, and then displayed on the flexible display 230.

Referring to FIG. 7, the first mode change icon 710 may be an icon displaying a mode (e.g., a first mode) in which the flexible display 230 is switchable to a slide-in state (e.g., a reduction mode) and/or a slide-out state (e.g., an expansion mode), according to a trigger signal of a user of the electronic device 200 using the flexible display 230 and/or the input unit 610. For example, the first mode change icon 710 may be an icon enabling the processor 120 to configure a mode (e.g., the first mode) of switching between a slide-in state and/or a slide-out state of the flexible display 230. For example, the first mode change icon 710 may display that a reduction mode and/or an expansion mode of switching the flexible display 230 to a slide-in state and/or a slide-out state has been configured. In other words, the first mode may enable a user to freely choose whether a slide-in state and/or a slide-out state of the flexible display 230 may be used.

Referring to FIG. 8, the second mode change icon 820 may be an icon displaying a mode (e.g., a second mode) enabling the flexible display 230 to maintain a fixed state (e.g., a fixing mode), according to a trigger signal of a user of the electronic device 200 using the flexible display 230 and/or the input unit 610. For example, the second mode change icon 820 may be an icon enabling the processor 120 to configure the flexible display 230 not to switch between a slide-in state and/or a slide-out state and to maintain a fixed state (e.g., a fixing mode). For example, the second mode change icon 820 may display that a fixing mode enabling the flexible display 230 not to be switched to a slide-in state and/or a slide-out state and to maintain a fixed state has been configured. For example, when the second mode change icon 820 is displayed or activated, the flexible display 230 may not be switched from a slide-in state to a slide-out state, and maintain the slide-in state. For example, when the second mode change icon 820 is displayed or activated, the flexible display 230 may not be switched from a slide-out state to a slide-in state, and maintain the slide-out state. In other words, the second mode imposes (e.g., to a user) that a certain state of the flexible display 230 is not to be changed.

Referring to FIG. 9, the third mode change icon 930 may be an icon displaying a mode (e.g., a third mode) in which the flexible display 230 is switchable to a slide-in state, a slide-out state, and/or a fixed state, based on a state or situation of the electronic device 200, according to a trigger signal of a user of the electronic device 200 using the flexible display 230 and/or the input unit 610. For example, the third mode change icon 930 may be an icon enabling the processor 120 to configure a mode (e.g., the third mode) of controlling a slide-in state, a slide-out state, and/or a fixed state of the flexible display 230, based on a state or situation of the electronic device 200. For example, the third mode change icon 930 may display that a smart mode (e.g., the third mode) of switching the flexible display 230 to a slide-in state, a slide-out state, and/or a fixed state has been configured. In other words, the third mode may intelligently define whether a state of the flexible display 230 may be changed (e.g., to a slide-in state or to a slide-out state) or may not be changed.

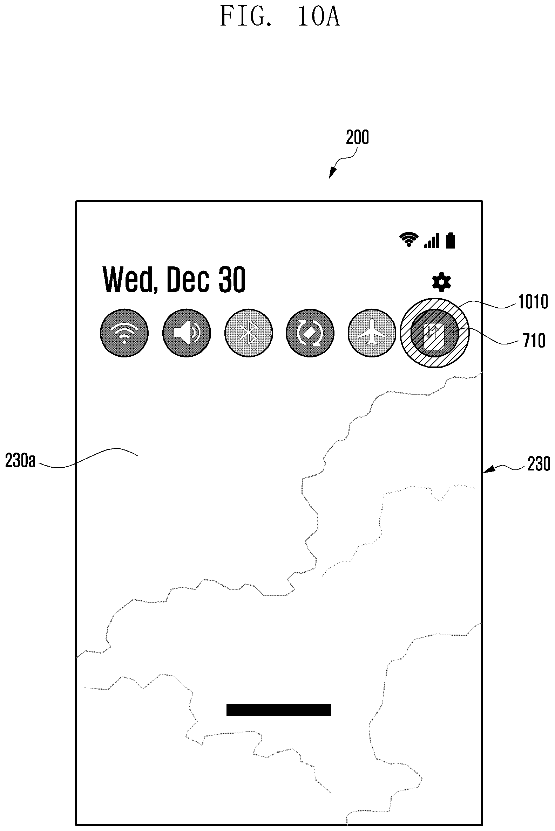

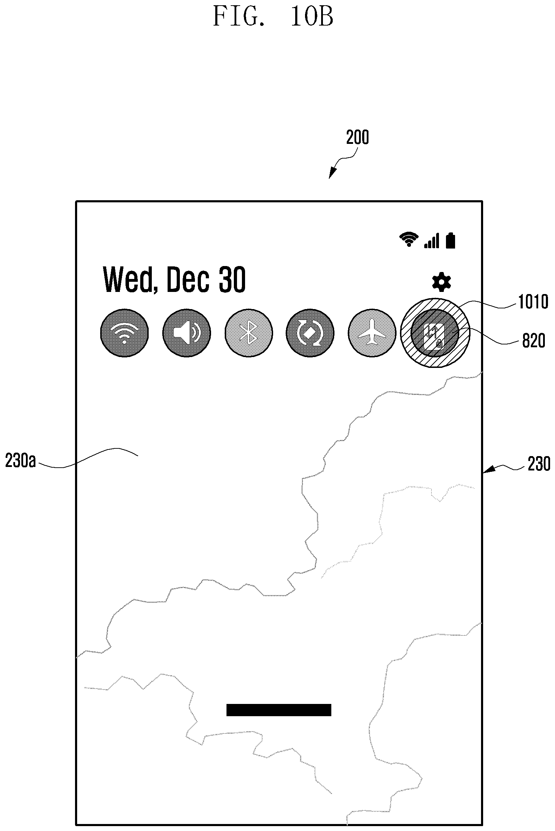

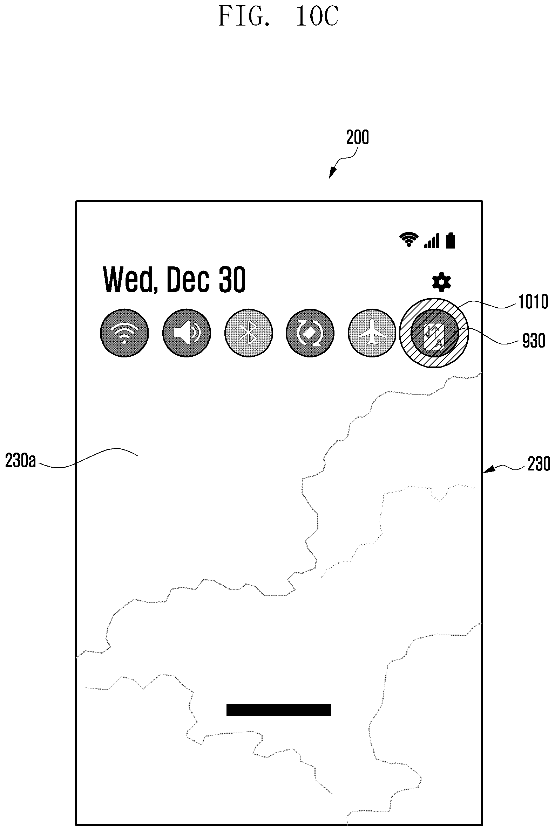

FIG. 10A is a diagram roughly illustrating a screen for selecting a first mode change icon of a flexible display of an electronic device according to an embodiment of the disclosure. FIG. 10B is a diagram roughly illustrating a screen for selecting a second mode change icon of a flexible display of an electronic device according to an embodiment of the disclosure. FIG. 10C is a diagram roughly illustrating a screen for selecting a third mode change icon of a flexible display of an electronic device according to an embodiment of the disclosure.

According to an embodiment, the first mode change icon 710, the second mode change icon 820, and the third mode change icon 930 may be switched by means of a configuration menu (e.g., a quick menu) displayed on the flexible display 230.

Referring to FIG. 10A, in a state where the first mode change icon 710 is deactivated in a configuration menu (e.g., a quick menu), when a user of the electronic device 200 makes a touch 1010 on the first mode change icon 710, the first mode change icon 710 may be changed to be in an activated state, and the electronic device 200 may be configured to be in the first mode (e.g., a reduction mode and/or expansion mode) in which the flexible display 230 is switchable to a slide-in state (e.g., a reduction mode) and/or a slide-out state (e.g., an expansion mode).

Referring to FIG. 10B, in a state where the first mode change icon 710 is activated in a configuration menu (e.g., a quick menu) through the embodiment of FIG. 10A, when a user of the electronic device 200 makes the touch 1010 on the activated first mode change icon 710, the first mode change icon 710 may be switched to the second mode change icon 820, and the electronic device 200 may be configured to be in the second mode (e.g., a fixing mode) enabling the flexible display 230 to maintain a fixed state. For example, the second mode (e.g., a fixing mode) may include a fixing mode of restricting the electronic device 200 not to be switched to a slide-in state (e.g., a reduction mode) and/or a slide-out state (e.g., an expansion mode)

According to various embodiments, in an embodiment of FIG. 10B, it has been described that when a user of the electronic device 200 makes the touch 1010 on the activated first mode change icon 710, the first mode change icon 710 is switched to the second mode change icon 820. However, the disclosure is not limited thereto. For example, when a user of the electronic device 200 makes the touch 1010 on the activated first mode change icon 710, the first mode change icon 710 is not switched to the second mode change icon 820, and the first mode change icon 710 may be switched to be in a deactivated state.

Referring to FIG. 10C, in a state where the second mode change icon 820 is activated in a configuration menu (e.g., a quick menu) through the embodiment of FIG. 10B, when a user of the electronic device 200 makes the touch 1010 on the activated second mode change icon 820, the second mode change icon 820 may be switched to the third mode change icon 930, and the electronic device 200 may be configured to be in the third mode (e.g., a smart mode) in which the flexible display 230 is switchable to a slide-in state, a slide-out state, and/or a fixed state.

According to various embodiments, in an embodiment of FIG. 10C, it has been described that when a user of the electronic device 200 makes the touch 1010 on the activated second mode change icon 820, the second mode change icon 820 is switched to the third mode change icon 930. However, the disclosure is not limited thereto. For example, when a user of the electronic device 200 makes the touch 1010 on the activated second mode change icon 820, the second mode change icon 820 is not switched to the third mode change icon 930, and the second mode change icon 820 may be switched to be in a deactivated state.

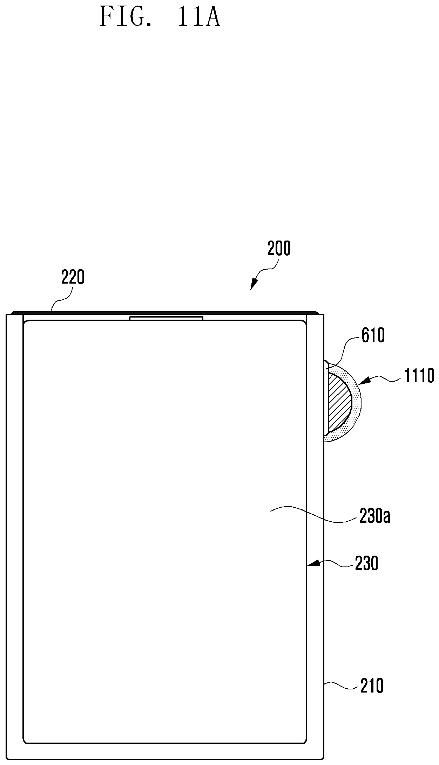

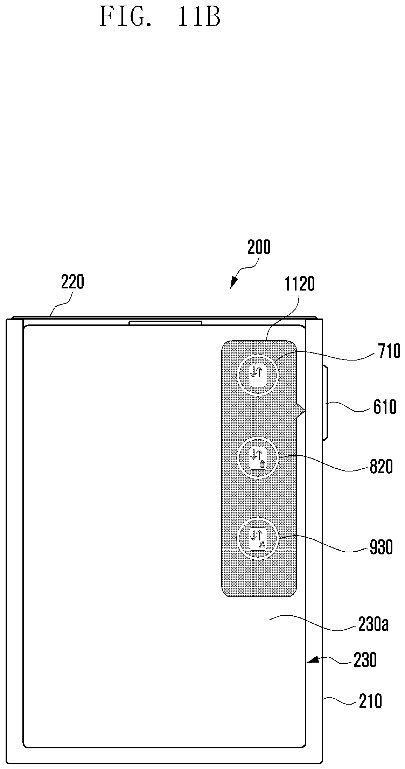

FIG. 11A is a diagram roughly illustrating an embodiment of an input signal (e.g., long press) for an input unit of an electronic device according to an embodiment of the disclosure. FIG. 11B is a diagram roughly illustrating a mode change menu provided via a flexible display according to an embodiment of the disclosure according to the input signal illustrated in FIG. 11A.

Referring to FIG. 11A, a user of the electronic device 200 may input a trigger signal by, for example, performing a long press 1110 on the input unit 610 (e.g., the key input device 219 mentioned with reference to FIG. 2A to FIG. 3B) disposed on one lateral surface of the first housing 210 for a designated time (e.g., about 1-1.5 seconds).

Referring to FIG. 11B, when a signal of the long press 1110 is input to the input unit 610 for a designated time, the processor 120 of the electronic device 200 may display a mode change menu 1120 at a designated position on the flexible display 230. For example, the mode change menu 1120 may include at least one of the first mode change icon 710, the second mode change icon 820, and the third mode change icon 930. However, as will be explained subsequently, the present disclosure is not limited to a long press being performed.

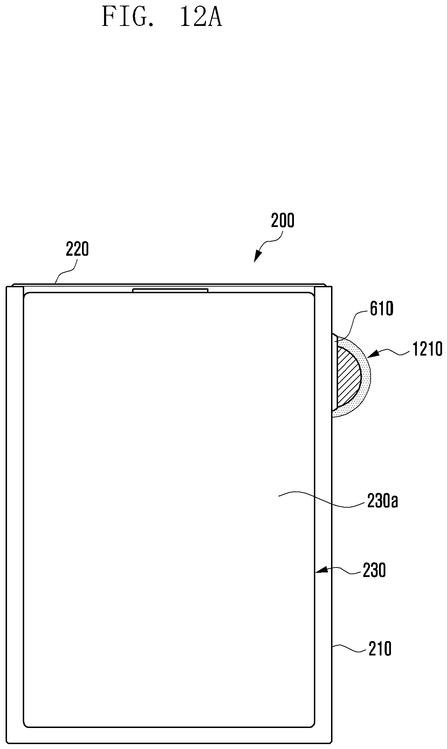

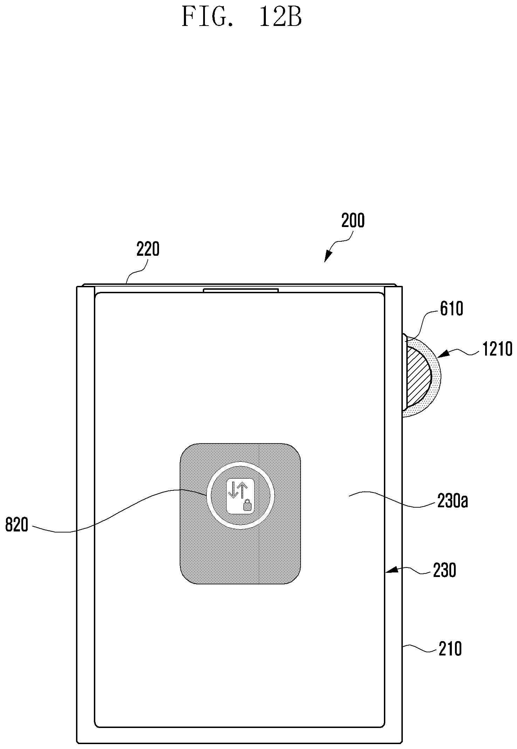

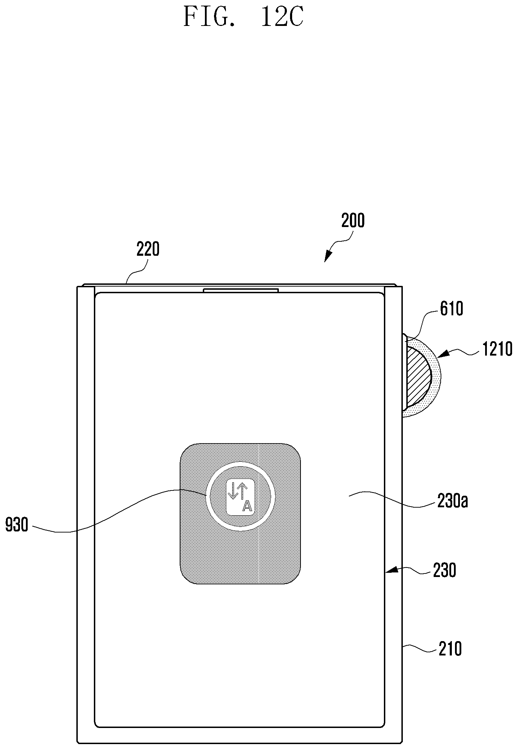

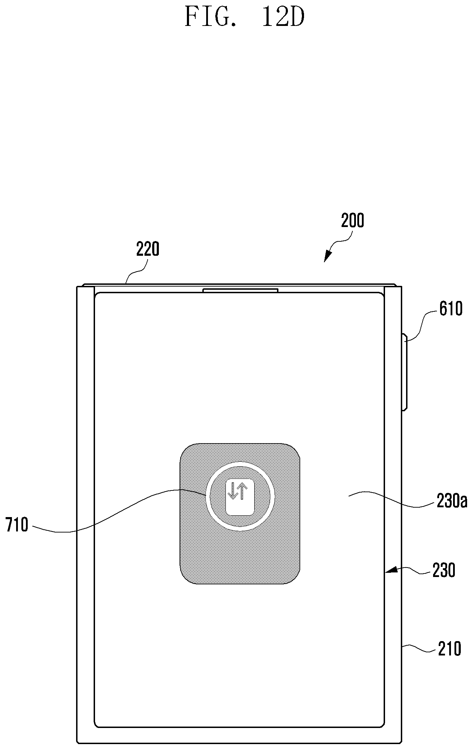

FIG. 12A is a diagram roughly illustrating an embodiment of an input signal (e.g., double tap) for an input unit of an electronic device according to an embodiment of the disclosure. FIG. 12B is a diagram roughly illustrating a second mode change icon generated according to the input signal illustrated in FIG. 12A of an electronic device according to an embodiment of the disclosure. FIG. 12C is a diagram roughly illustrating a third mode change icon generated according to the input signal illustrated in FIG. 12B of an electronic device according to an embodiment of the disclosure. FIG. 12D is a diagram roughly illustrating a first mode change icon generated according to the input signal illustrated in FIG. 12C of an electronic device according to an embodiment of the disclosure.

Referring to FIG. 12A, a user of the electronic device 200 may input a trigger signal by, for example, performing a double tap 1210 on the input unit 610 (e.g., the key input device 219 mentioned with reference to FIG. 2A to FIG. 3B) disposed on one lateral surface of the first housing 210.

Referring to FIG. 12B, in an embodiment, when a signal of the double tap 1210 is input to the input unit 610, the processor 120 may configure the electronic device 200 to be in the second mode (e.g., a fixing mode), and display, for example, the second mode change icon 820 at a designated position on the flexible display 230. For example, according to input of the signal of the double tap 1210 to the input unit 610, the processor 120 may switch the first mode change icon 710 to the second mode change icon 820 and display the switched second mode change icon, and configure the flexible display 230 to operate in the second mode (e.g., a fixing mode) from the first mode (e.g., a reduction mode and/or an expansion mode).

Referring to FIG. 12C, in a state where the second mode change icon 820 is displayed on the flexible display 230, when a signal of the double tap 1210 is input to the input unit 610, the processor 120 may configure the electronic device 200 to be in the third mode (e.g., a smart mode), and display, for example, the third mode change icon 930 at a designated position on the flexible display 230. For example, in a state where the second mode change icon 820 is displayed on the flexible display 230, according to input of the signal of the double tap 1210 to the input unit 610, the processor 120 may switch the second mode change icon 820 to the third mode change icon 930 and display the switched third mode change icon, and configure the flexible display 230 to operate in the third mode (e.g., a smart mode) from the second mode (e.g., a fixing mode).

Referring to FIG. 12D, in a state where the third mode change icon 930 is displayed on the flexible display 230, when a signal of the double tap 1210 is input to the input unit 610, the processor 120 may configure the electronic device 200 to be in the first mode (e.g., a reduction mode and/or expansion mode), and display, for example, the first mode change icon 710 at a designated position on the flexible display 230. For example, in a state where the third mode change icon 930 is displayed on the flexible display 230, according to input of the signal of the double tap 1210 to the input unit 610, the processor 120 may switch the third mode change icon 930 to the first mode change icon 710 and display the switched first mode change icon, and configure the flexible display 230 to operate in the first mode (e.g., a reduction mode and/or expansion mode) from the third mode (e.g., a smart mode).

According to various embodiments, in the above embodiments of FIG. 12A to FIG. 12D, it has been described that, according to the double tap signal input to the input unit 610, the mode change icon is changed in the order of the second mode change icon 820, the third mode change icon 930, and the first mode change icon 710. However, the disclosure is not limited to the above order, and the first mode change icon 710, the second mode change icon 820, and the third mode change icon 930 may be changed in various orders according to a double tap signal. According to an embodiment, when the first mode change icon 710, the second mode change icon 820, or the third mode change icon 930 displayed on the flexible display 230 is touched, the processor 120 may configure the flexible display 230 to be in the first mode, the second mode, or the third mode.

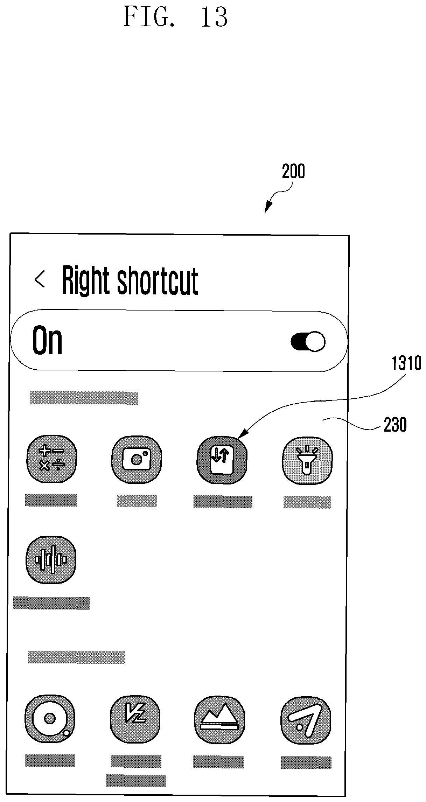

FIG. 13 is a diagram roughly illustrating a mode change shortcut menu of an electronic device according to an embodiment of the disclosure.

Referring to FIG. 13, the electronic device 200 may display a configuration menu enabling configuration of a shortcut displayed on a lock screen. In an embodiment, a mode change shortcut menu 1310 enabling the state or mode of the electronic device 200 to be changed may be displayed on the flexible display 230.

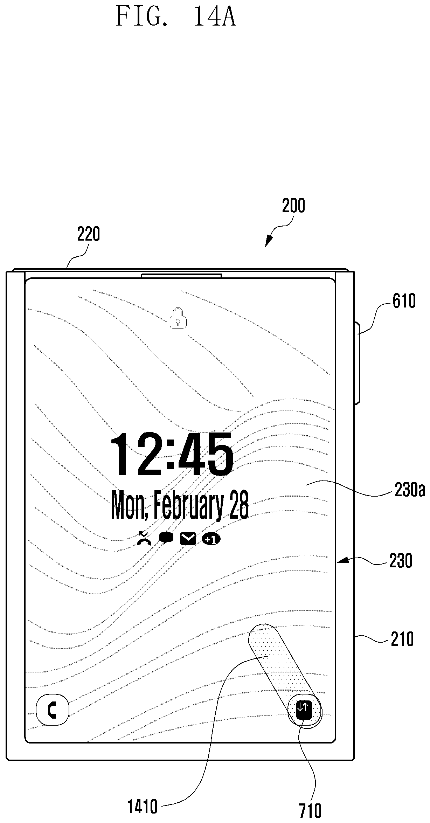

According to an embodiment, in a state where the mode change shortcut menu 1310 is deactivated, when a user of the electronic device 200 touches the mode change shortcut menu 1310, the deactivated mode change shortcut menu 1310 may be activated. For example, when the mode change shortcut menu 1310 is activated, as described with reference to FIG. 14A to FIG. 14C, the first mode change icon 710, the second mode change icon 820, or the third mode change icon 930 may be displayed at a designated position on the lock screen.

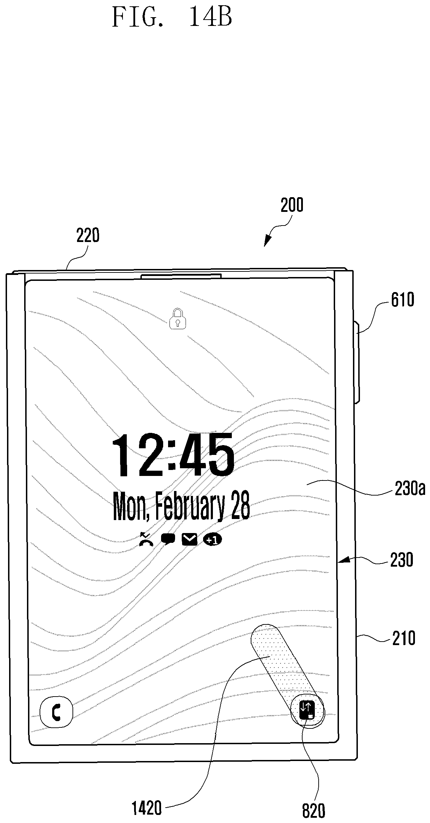

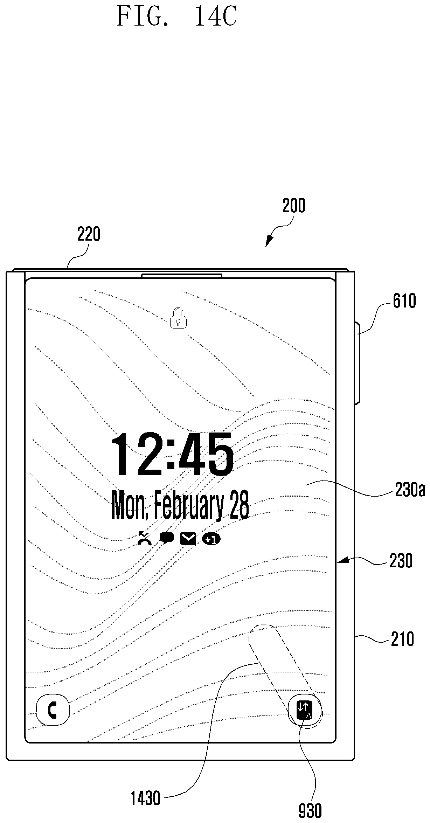

FIG. 14A is a diagram roughly illustrating an embodiment in which a mode change icon is changed according to a first input signal for a flexible display when an electronic device according to an embodiment of the disclosure is in a lock screen state. FIG. 14B is a diagram roughly illustrating an embodiment in which a mode change icon is changed according to a second input signal for a flexible display when an electronic device according to an embodiment of the disclosure is in a lock screen state. FIG. 14C is a diagram roughly illustrating an embodiment in which a mode change icon is changed according to a third input signal for a flexible display when an electronic device according to an embodiment of the disclosure is in a lock screen state.

According to an embodiment, the first mode change icon 710, the second mode change icon 820, and the third mode change icon 930 according to various embodiments of the disclosure may be changed or switched according to, for example, an input signal for the flexible display 230 when the electronic device 200 is in a lock screen state. For example, when the electronic device 200 is in a lock screen state, an input signal for the flexible display 230 may include a swipe or a drag.

Referring to FIG. 14A, while the flexible display 230 is displaying a lock screen, a user of the electronic device 200 may touch the first mode change icon 710 displayed on the flexible display 230 and perform an operation of a first swipe 1410 (e.g., a first input signal) to a designated position or in a designated direction. When the user of the electronic device 200 has touched the first mode change icon 710 on the flexible display 230 and has performed the operation of the first swipe 1410 to the designated position or in the designated direction, the processor 120 may switch the configuration of the electronic device 200 from the first mode (e.g., a reduction mode and/or expansion mode) to the second mode (e.g., a fixing mode) and, as illustrated in FIG. 14B, display the second mode change icon 820 on the flexible display 230.

Referring to FIG. 14B, while the flexible display 230 is displaying a lock screen, a user of the electronic device 200 may touch the second mode change icon 820 displayed on the flexible display 230 and perform an operation of a second swipe 1420 (e.g., a second input signal) to a designated position or in a designated direction. When the user of the electronic device 200 has touched the second mode change icon 820 displayed on the flexible display 230 and has performed the operation of the second swipe 1420 to the designated position or in the designated direction, the processor 120 may switch the configuration of the electronic device 200 from the second mode (e.g., a fixing mode) to the third mode (e.g., a smart mode), and as illustrated in FIG. 14C, display the third mode change icon 930 on the flexible display 230.

Referring to FIG. 14C, while the flexible display 230 is displaying a lock screen, a user of the electronic device 200 may touch the third mode change icon 930 displayed on the flexible display 230 and perform an operation of a third swipe 1430 (e.g., a third input signal) to a designated position or in a designated direction. When the user of the electronic device 200 has touched the third mode change icon 930 displayed on the flexible display 230 and has performed the operation of the third swipe 1430 to the designated position or in the designated direction, the processor 120 may switch the configuration of the electronic device 200 from the third mode (e.g., a smart mode) to the first mode (e.g., a reduction mode and/or expansion mode), and as illustrated in FIG. 14A, display the first mode change icon 710 on the flexible display 230.

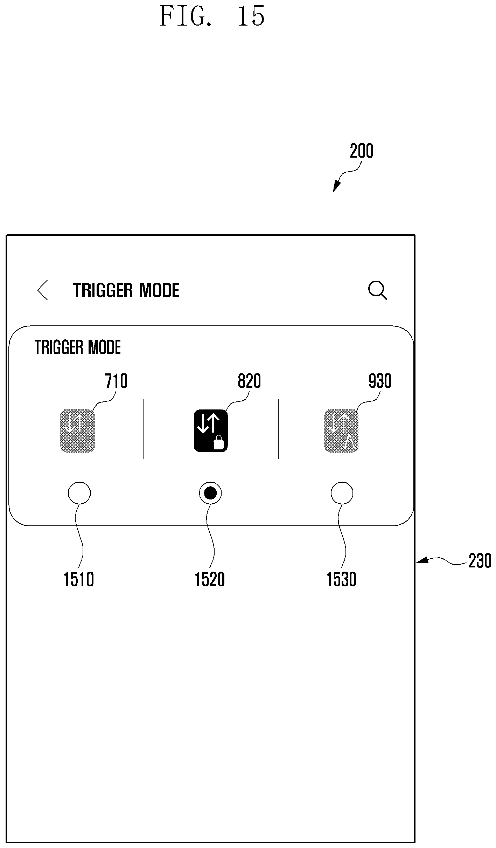

FIG. 15 is a diagram roughly illustrating a screen for a configuration menu enabling selection of a mode change icon displayed in a flexible display of an electronic device according to an embodiment of the disclosure.

According to an embodiment, the first mode change icon 710, the second mode change icon 820, and the third mode change icon 930 according to various embodiments of the disclosure may be selected through a configuration screen displayed on the flexible display 230.

According to an embodiment, a user of the electronic device 200 may select a first configuration menu 1510 displayed on the configuration screen, whereby the first mode change icon 710 is selected. For example, when the first mode change icon 710 is selected, the electronic device 200 may be configured to operate in the first mode (e.g., a slide-in state and/or a slide-out state).

According to an embodiment, a user of the electronic device 200 may select a second configuration menu 1520 displayed on the configuration screen, whereby the second mode change icon 820 is selected. For example, when the second mode change icon 820 is selected, the electronic device 200 may be configured to operate in the second mode (e.g., a fixed state).

According to an embodiment, a user of the electronic device 200 may select a third configuration menu 1530 displayed on the configuration screen, whereby the third mode change icon 930 is selected. For example, when the third mode change icon 930 is selected, the electronic device 200 may be configured to operate in the third mode (e.g., a slide-in state, a slide-out state, and/or a fixed state).

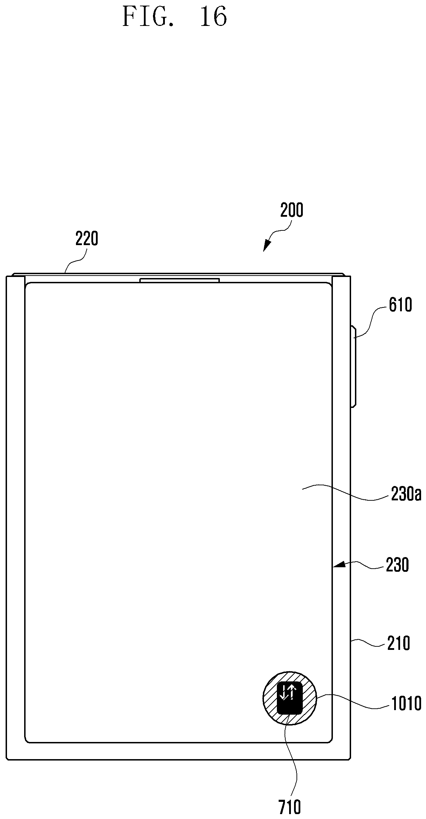

FIG. 16 is a diagram roughly illustrating an embodiment of providing a mode change icon expected according to a state of an electronic device according to an embodiment of the disclosure.

Referring to FIG. 16, the processor 120 may provide, to the flexible display 230, a mode change icon enabling a currently configured mode of the electronic device 200 to be changed to a different mode. For example, when the electronic device 200 is currently configured to be in the second mode (e.g., a fixing mode), but the configuration of the electronic device 200 is expected to be changed to the first mode (e.g., a reduction mode and/or expansion mode) or a configuration change to the first mode is recommended, the processor 120 may display, via the flexible display 230, the first mode change icon 710 capable of controlling the electronic device 200 to be switchable to the first mode.

According to an embodiment, when a user of the electronic device 200 makes the touch 1010 on the first mode change icon 710, the processor 120 may display, via the flexible display 230, the second mode change icon 820 of switching the configuration from the first mode (e.g., a reduction mode and/or expansion mode) to the second mode (e.g., a fixing mode).

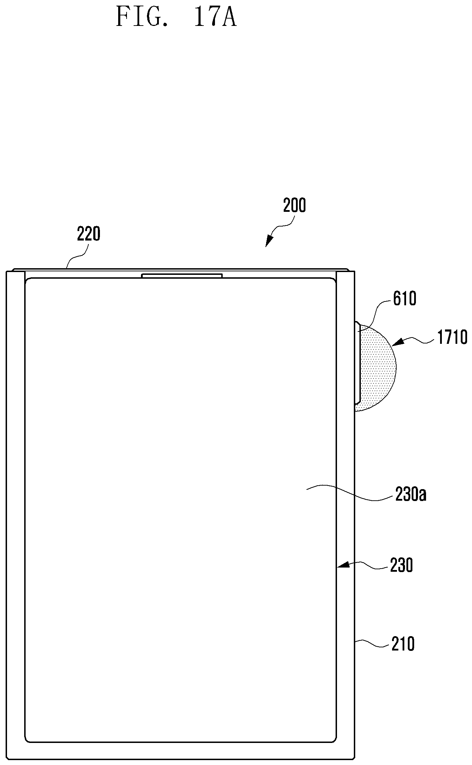

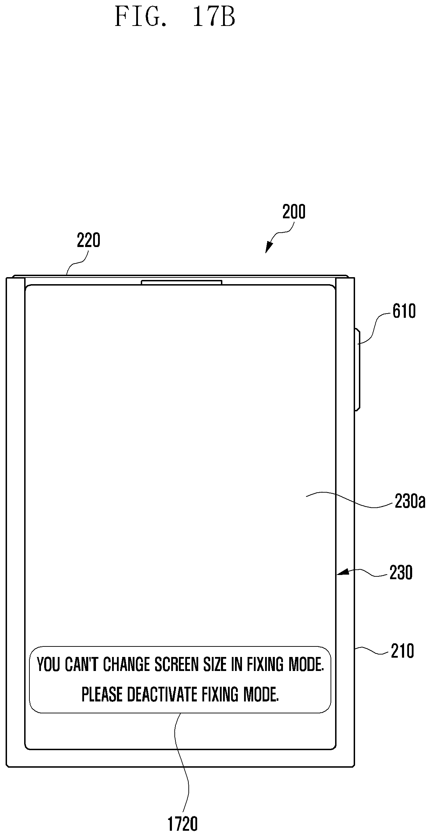

FIG. 17A is a diagram roughly illustrating an embodiment of an input signal (e.g., tap) for an input unit when an electronic device according to an embodiment of the disclosure is in a second mode. FIG. 17B is a diagram roughly illustrating a pop-up provided based on a signal input via an input unit when an electronic device according to an embodiment of the disclosure is in a second mode.

Referring to FIG. 17A, in a case where the electronic device 200 is configured to be in the second mode (e.g., a fixed state or a fixing mode), a user of the electronic device 200 may input a trigger signal by, for example, performing a tap 1710 on the input unit 610 (e.g., the key input device 219 mentioned with reference to FIG. 2A to FIG. 3B) disposed on one lateral surface of the first housing 210.

According to an embodiment, in a case where the electronic device 200 has been configured to be in the second mode (e.g., a fixed state or a fixing mode), even when a trigger signal such as the tap 1710 is input to the input unit 610, the electronic device 200 may control the flexible display 230 not to be switched from a slide-in state to a slide-out state or from a slide-out state to a slide-in state.

Referring to FIG. 17B, in a state where the electronic device 200 is configured to be in the second mode (e.g., a fixed state or a fixing mode), when a trigger signal such as the tap 1710 is input to the input unit 610, the processor 120 may provide, via the flexible display 230, a pop-up 1720 notifying that the electronic device 200 has been configured to be in the second mode (e.g., a fixing mode).

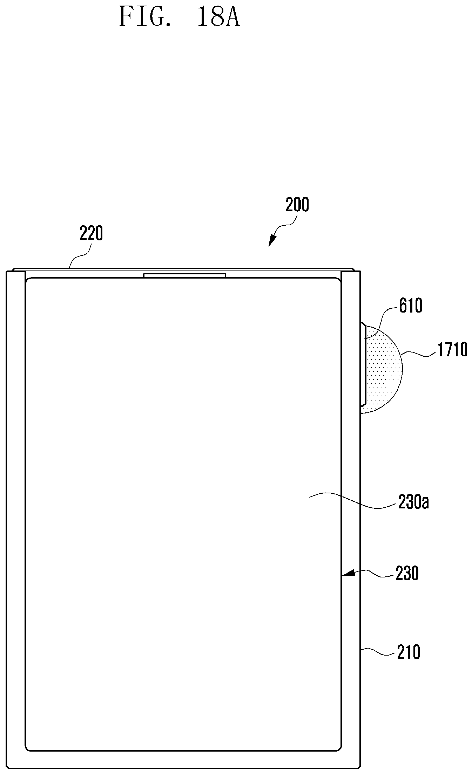

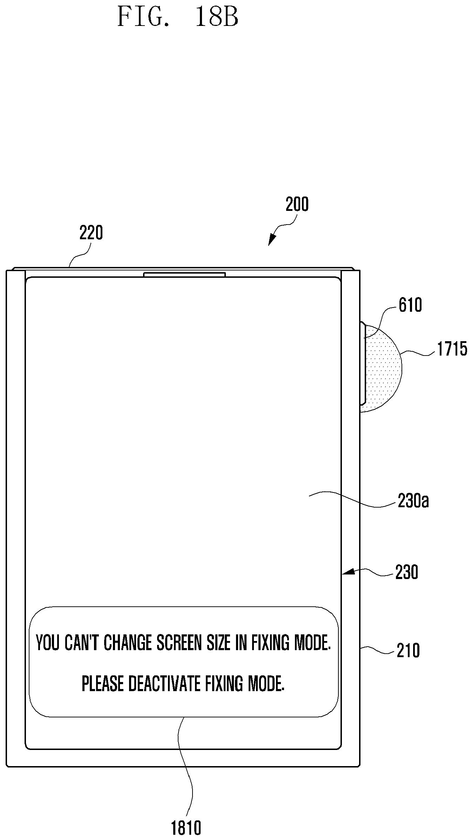

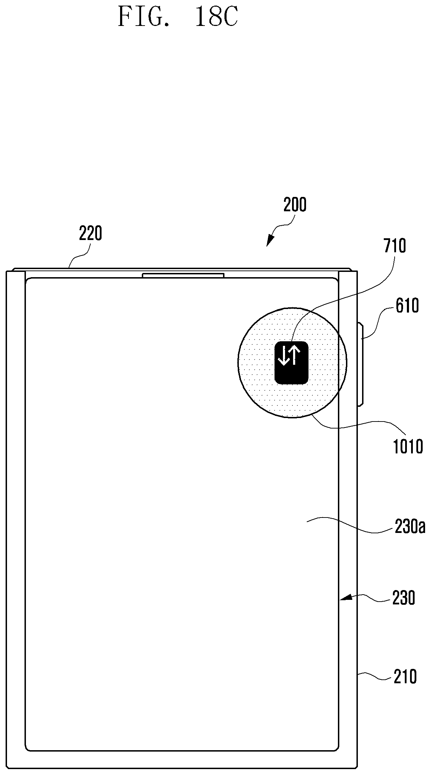

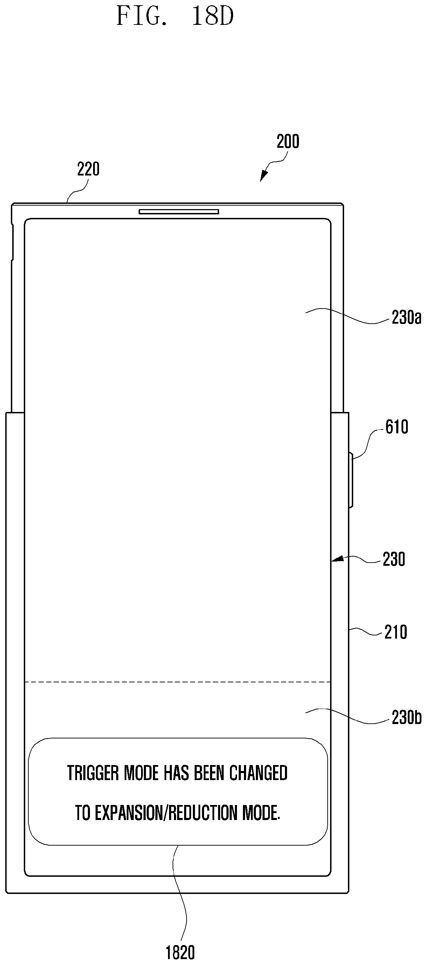

FIG. 18A is a diagram roughly illustrating an embodiment of an input signal (e.g., tap) for an input unit when an electronic device according to an embodiment of the disclosure is in a second mode. FIG. 18B is a diagram roughly illustrating a first pop-up provided based on a signal input via an input unit when an electronic device according to an embodiment of the disclosure is in a second mode. FIG. 18C is a diagram roughly illustrating a mode change icon provided according to an input signal (e.g., tap) for an input unit by an electronic device according to an embodiment of the disclosure. FIG. 18D is a diagram roughly illustrating an embodiment in which the shape of a flexible display according to an embodiment of the disclosure is changed according to a touch of a mode change icon.

Referring to FIG. 18A, in a case where the electronic device 200 is configured to be in the second mode (e.g., a fixed state or a fixing mode), a user of the electronic device 200 may input a trigger signal by, for example, performing the tap 1710 on the input unit 610 (e.g., the key input device 219 mentioned with reference to FIG. 2A to FIG. 3B) disposed on one lateral surface of the first housing 210.

According to an embodiment, in a case where the electronic device 200 has been configured to be in the second mode (e.g., a fixed state or a fixing mode), even when a trigger signal such as the first tap 1710 is input to the input unit 610, the electronic device 200 may not switch the flexible display 230 to a slide-in state or a slide-out state.

Referring to FIG. 18B, in a state where the electronic device 200 is configured to be in the second mode (e.g., a fixed state or a fixing mode), when a trigger signal such as the first tap 1710 is input to the input unit 610, the processor 120 may provide, via the flexible display 230, a first pop-up 1810 notifying that the electronic device 200 has been configured to be in the second mode (e.g., a fixing mode).

Referring to FIG. 18C, in a state where the first pop-up 1810 notifying that the electronic device 200 has been configured to be in the second mode (e.g., a fixing mode) is provided to the flexible display 230, when a trigger signal such as a second tap 1715 is input to the input unit 610 within a designated time (e.g., about 1-1.5 seconds), the processor 120 may provide, to the flexible display 230, the first mode change icon 710 capable of switching the electronic device 200 to a slide-out state or a slide-in state.

Referring to FIG. 18D, when the user of the electronic device 200 inputs a trigger signal by performing the touch 1010 on the first mode change icon 710 provided to the flexible display 230, the electronic device 200 may be configured to be in the first mode and the flexible display 230 may be switched to a slide-in state if same is in a slide-out state, and may be switched to a slide-out state if same is in a slide-in state. For example, when the flexible display 230 is switched from a slide-in state to a slide-out state, a first display region (e.g., the first part 230a in FIG. 3A) and a second display region (e.g., the second part 230b in FIG. 3A) of the flexible display 230 may be exposed to the user of the electronic device 200. For example, the processor 120 may provide, through the flexible display 230, a second pop-up 1820 notifying that the electronic device 200 has been changed to the first mode (e.g., a slide-in state and/or slide-out state).

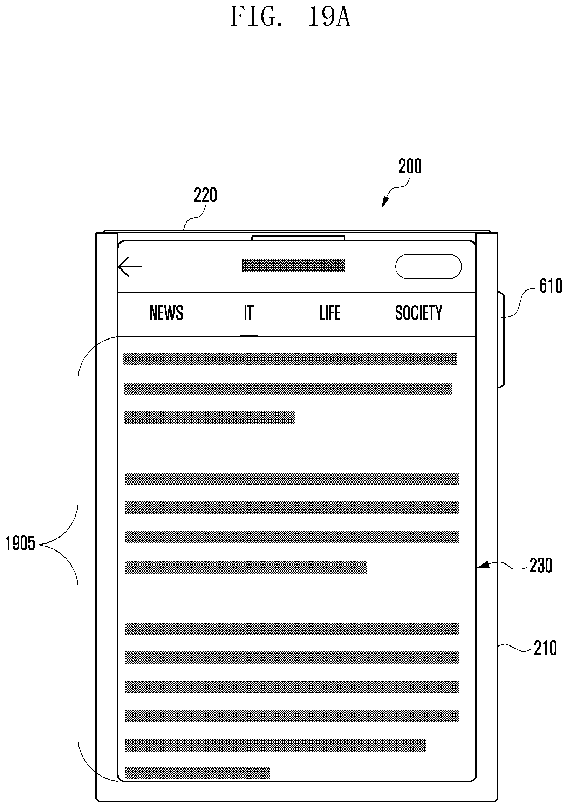

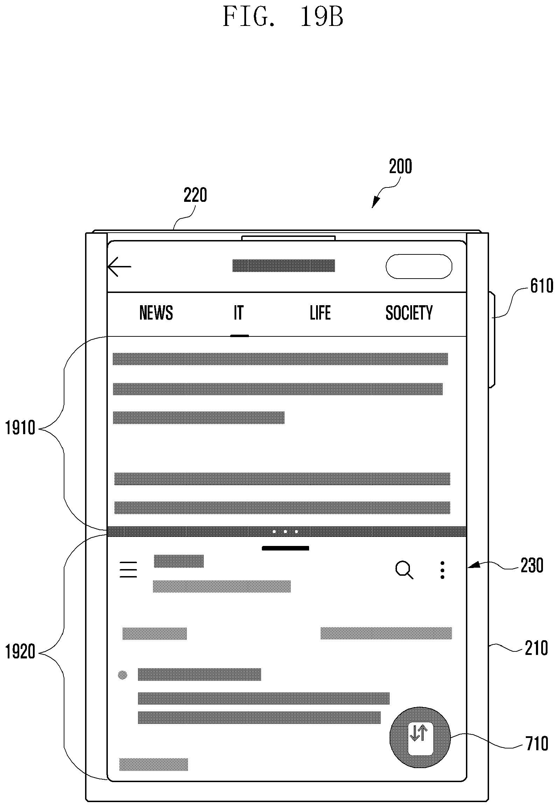

FIG. 19A is a diagram roughly illustrating text information displayed via a flexible display of an electronic device according to an embodiment of the disclosure. FIG. 19B is a diagram roughly illustrating a screen in which a flexible display of an electronic device according to an embodiment of the disclosure is operated as a multi-window.

Referring to FIG. 19A, in an embodiment, the electronic device 200 may provide text information 1905 through the flexible display 230 in the second mode (e.g., a fixing mode). According to an embodiment, in the configured second mode, if the transformation of the shape of the flexible display 230 is expected, the electronic device 200 may display the first mode change icon 710.

Referring to FIG. 19B, when the electronic device 200 is in, for example, the second mode and a slide-in state, if the flexible display 230 is switched to provide a multi-window (e.g., split view) that is divided into a first window 1910 and a second window 1920, the processor 120 may display the first mode change icon 710 on the flexible display 230. In this case, in an embodiment, the first mode change icon 710 may be displayed for a designated time.

According to an embodiment, when a user of the electronic device 200 touches the first mode change icon 710 displayed on the flexible display 230, the electronic device 200 may be configured to be in the first mode (e.g., a reduction mode and/or expansion mode). For example, the flexible display 230 may be switched from a slide-in state to a slide-out state as illustrated in FIG. 18D. For example, when the flexible display 230 is switched from a slide-in state to a slide-out state, a screen of the first window 1910 may be displayed on a first display region (e.g., the first part 230a in FIG. 3A) of the flexible display 230, and a screen of the second window 1920 may be displayed on a second display region (e.g., the second part 230b in FIG. 3A).

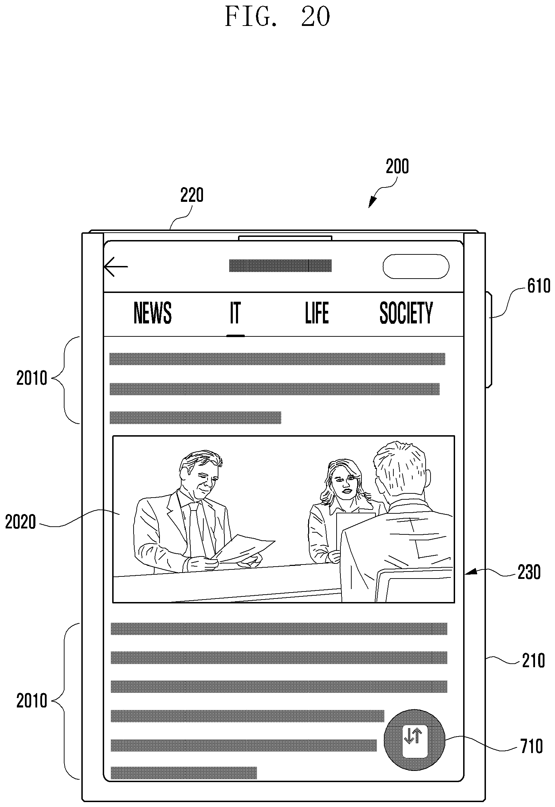

FIG. 20 is a diagram roughly illustrating a screen in which a flexible display of an electronic device according to an embodiment of the disclosure displays text information and video information.

Referring to FIG. 20, the electronic device 200 may provide text information 2010 and video information 2020 through the flexible display 230 in the second mode (e.g., a fixing mode) and a slide-in state of the electronic device 200 and the flexible display 230.

Referring to FIG. 20, in an embodiment, when the electronic device 200 is in the second mode and a slide-in state, if the flexible display 230 provides the text information 2010 and the video information 2020 in a picture-in-picture (PIP) type and a maximum size, the processor 120 may display the first mode change icon 710 on the flexible display 230.

According to an embodiment, when a user of the electronic device 200 touches the first mode change icon 710 displayed on the flexible display 230, the electronic device may be configured to be in the first mode (e.g., a reduction mode and/or expansion mode). For example, the flexible display 230 may be switched from a slide-in state to a slide-out state as illustrated in FIG. 18D. For example, when the flexible display 230 is switched from a slide-in state to a slide-out state, the text information 2010 may be displayed on the first display region (e.g., the first part 230a in FIG. 3A) of the flexible display 230, and the video information 2020 may be displayed on the second display region (e.g., the second part 230b in FIG. 3A).

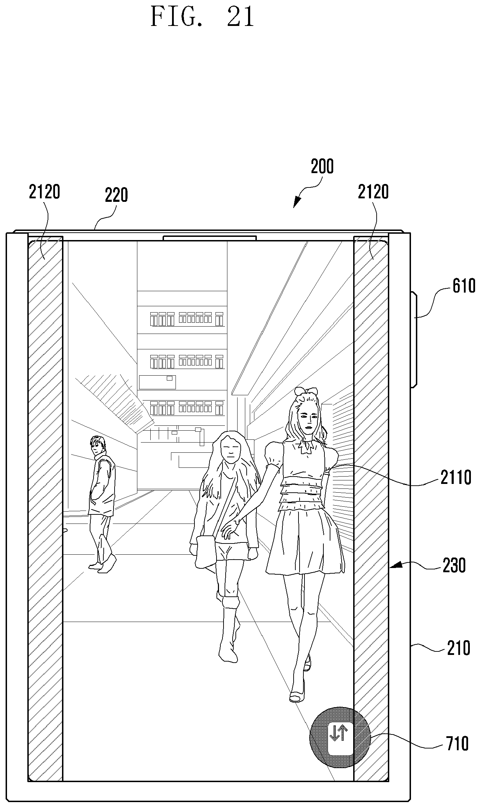

FIG. 21 is a diagram roughly illustrating a screen in which a flexible display of an electronic device according to an embodiment of the disclosure displays image information.

Referring to FIG. 21, when the electronic device 200 and the flexible display 230 are in the second mode (e.g., a fixing mode) and in a slide-in state, the electronic device 200 may provide image information 2110 through the flexible display 230.

Referring to FIG. 21, in an embodiment, when in the second mode and a slide-in state of the electronic device 200, the flexible display 230 provides the image information 2110 (e.g., a photo), if a letter box 2120 is displayed on the flexible display 230, the processor 120 may display the first mode change icon 710 on the flexible display 230.

According to an embodiment, when a user of the electronic device 200 touches the first mode change icon 710 displayed on the flexible display 230, the electronic device may be configured to be in the first mode (e.g., a reduction mode and/or expansion mode). For example, the flexible display 230 may be switched from a slide-in state to a slide-out state as illustrated in FIG. 18D. For example, when the flexible display 230 is switched from a slide-in state to a slide-out state, the image information 2110 may be expanded and displayed through the first display region (e.g., the first part 230a in FIG. 3A) and the second display region (e.g., the second part 230b in FIG. 3A) of the flexible display 230 so as to remove the letter box 2120.

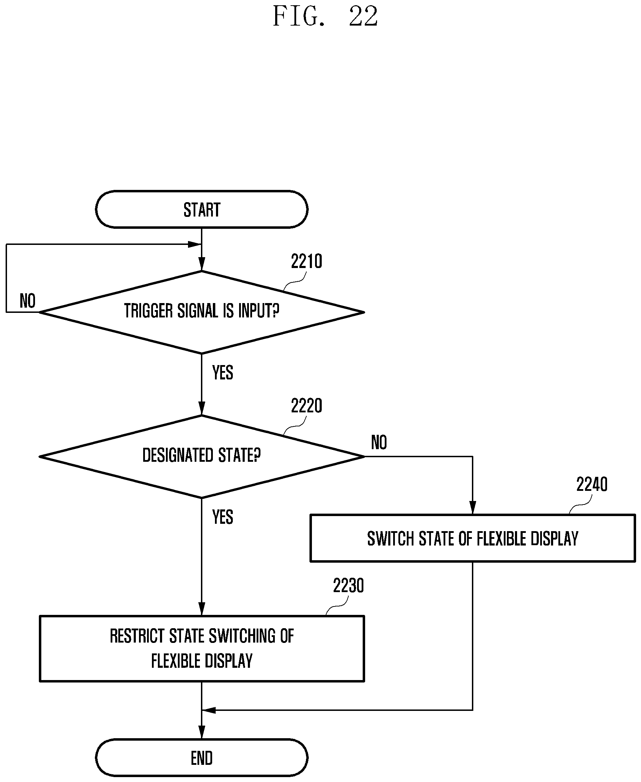

FIG. 22 is a flowchart roughly illustrating a method of controlling an electronic device according to an embodiment of the disclosure.

According to an embodiment, a method mentioned with reference to FIG. 22 may be performed, for example, by means of the elements of the electronic device 200 described with reference to FIG. 6. The method mentioned with reference to FIG. 22 may include, for example, embodiments described with reference to FIG. 1 to FIG. 21. In an embodiment below, operations may be sequentially performed, but sequential performance is not necessarily required. For example, the order of the operations may be changed. For example, the operations may be performed in parallel. For example, the operations may not be performed all and at least some of them may be performed.

In operation 2210, the processor 120 may identify whether a trigger signal (e.g., a input signal) is input via the input unit 610.

According to an embodiment, the processor 120 may identify whether a trigger signal for switching the electronic device 200 from a slide-in state to a slide-out state or switching same from a slide-out state to a slide-in state is input via the input unit 610.

According to an embodiment, the processor 120 may monitor a state or situation of the electronic device 200. For example, the processor 120 may monitor whether the electronic device 200 is making a call (e.g., a voice call and/or a video call) or is running a navigation application, a health application, and/or a biometric recognition application. According to an embodiment, the processor 120 may use the sensor module 176 (e.g., a geomagnetic sensor, an acceleration sensor, a direction sensor, an angular velocity sensor, or a gyro sensor) to monitor whether the flexible display 230 of the electronic device 200 has been flipped over toward the ground. According to an embodiment, the processor 120 may use the sensor module 176 (e.g., a temperature sensor) to monitor whether the internal temperature of the electronic device 200 exceeds a designated temperature. According to an embodiment, the processor 120 may use the sensor module 176 (e.g., a humidity sensor) to monitor whether moisture is detected from a connector port (e.g., the connector port 208 in FIG. 3A) of the electronic device 200. According to an embodiment, the processor 120 may use the sensor module 176 (e.g., an illuminance sensor) to monitor whether the electronic device 200 is in a designated place (e.g., a closed place like a bag or pocket). According to an embodiment, the processor 120 may monitor a state or a situation such as the internal remaining power of a battery (e.g., the battery 189 in FIG. 1) of the electronic device 200, or whether the electronic device 200 is being charged.

In operation 2220, the processor 120 may identify whether the electronic device 200 is in a state corresponding to a designated condition.

According to an embodiment, the processor 120 may identify, based on the above monitoring, that a case where the electronic device 200 is making a call or is running a designated application, a case where the flexible display 230 has been flipped over toward the ground, a case where the internal temperature of the electronic device 200 exceeds the designated temperature, a case where moisture is detected from the connector port 208 of the electronic device 200, a case where the electronic device 200 is in a designated place, and/or a case where the electronic device 200 is being charged is the designated state or the state corresponding to the designated condition.

In operation 2230, in a case where the electronic device 200 is in the state corresponding to the designated condition, even if a trigger signal is input, the processor 120 may perform control to restrict switching of the state of the flexible display 230.

According to an embodiment, in a case where the electronic device 200 is in a designated state (e.g., a state corresponding to a designated condition), even if a trigger signal related to switching of a slide-in state and/or slide-out state of the flexible display 230 is input, the processor 120 may restrict the flexible display 230 being switched from a slide-in state to a slide-out state or switched from a slide-out state to a slide-in state. According to an embodiment, in a case where the electronic device 200 is in the state corresponding to the designated condition, the processor 120 may control the flexible display 230 to maintain a slide-in state without being switched from the slide-in state to a slide-out state, or maintain a slide-out state without being switched from the slide-out state to a slide-in state.

In operation 2240, in a case where the electronic device 200 is not in the state corresponding to the designated condition, the processor 120 may control the state of the flexible display 230 to be switched, based on a trigger signal related to switching of a slide-in state and/or slide-out state of the flexible display 230.

According to an embodiment, in a case where the electronic device 200 is not in the state corresponding to the designated condition, the processor 120 may control the flexible display 230 to be switched from a slide-in state to a slide-out state, or switched from a slide-out state to a slide-in state, based on a trigger signal.

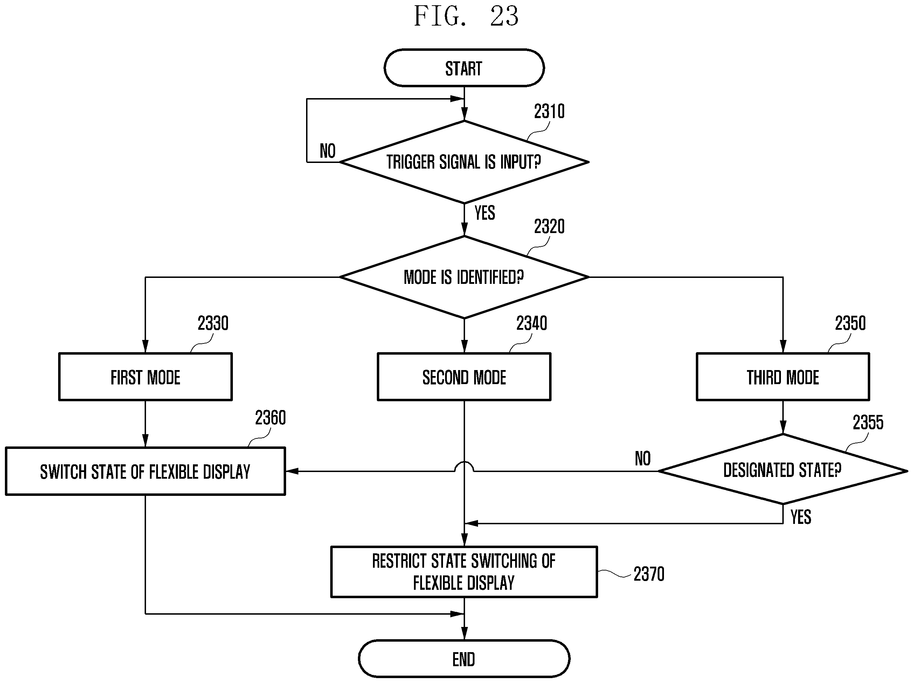

FIG. 23 is a flowchart roughly illustrating a method of controlling mode change of an electronic device according to an embodiment of the disclosure.

According to an embodiment, a method mentioned with reference to FIG. 23 may be performed, for example, by means of the elements of the electronic device 200 described with reference to FIG. 6. The method mentioned with reference to FIG. 23 may include, for example, embodiments described with reference to FIG. 1 to FIG. 22. In an embodiment below, operations may be sequentially performed, but sequential performance is not necessarily required. For example, the order of the operations may be changed. For example, the operations may be performed in parallel. For example, the operations may not be performed all and at least some of them may be performed.

In operation 2310, the processor 120 may identify whether a trigger signal (e.g., a input signal) is input via the input unit 610.

According to an embodiment, the processor 120 may identify whether a trigger signal for switching the electronic device 200 from a slide-in state to a slide-out state or switching same from a slide-out state to a slide-in state is input via the input unit 610.

In operation 2320, the processor 120 may identify which mode the electronic device 200 has been configured to be in.

According to an embodiment, the processor 120 may identify whether the electronic device 200 has been configured to be in a first mode (e.g., a reduction mode and/or expansion mode), a second mode (e.g., a fixing mode), or a third mode (e.g., a smart mode), through operation 2320 above.

In operation 2330, in a case where it is identified through operation 2320 above that the electronic device 200 has been configured to be in the first mode, the processor 120 may control the state of the flexible display 230 to be switched, based on the trigger signal in operation 2360.

According to an embodiment, in a case where the electronic device 200 has been configured to be in the first mode, when a trigger signal related to switching of a slide-in state and/or slide-out state of the flexible display 230 is input, the processor 120 may control the flexible display 230 to be switched from a slide-in state to a slide-out state or switched from a slide-out state to a slide-in state.

In operation 2340, in a case where it is identified through operation 2320 above that the electronic device 200 has been configured to be in the second mode, even if the trigger signal is input, the processor 120 may perform control to restrict the state of the flexible display 230 being switched in operation 2370.

According to an embodiment, in a case where the electronic device 200 has been configured to be in the second mode, even if a trigger signal related to switching of a slide-in state and/or slide-out state of the flexible display 230 is input, the processor 120 may restrict the flexible display 230 being switched from a slide-in state to a slide-out state or switched from a slide-out state to a slide-in state.

In operation 2350, in a case where it is identified through operation 2320 above that the electronic device 200 has been configured to be in the third mode, the processor 120 may identify whether the electronic device 200 is in a state corresponding to a designated condition in operation 2355.

According to an embodiment, in a case where the electronic device 200 is not in the state corresponding to the designated condition in operation 2355 above, the processor 120 may control the state of the flexible display 230 to be switched, based on a trigger signal as in operation 2360.

According to an embodiment, in a case where the electronic device 200 is in the state corresponding to the designated condition in operation 2355 above, even if a trigger signal is input, the processor 120 may perform control to restrict the state of the flexible display 230 being switched, as in operation 2370.

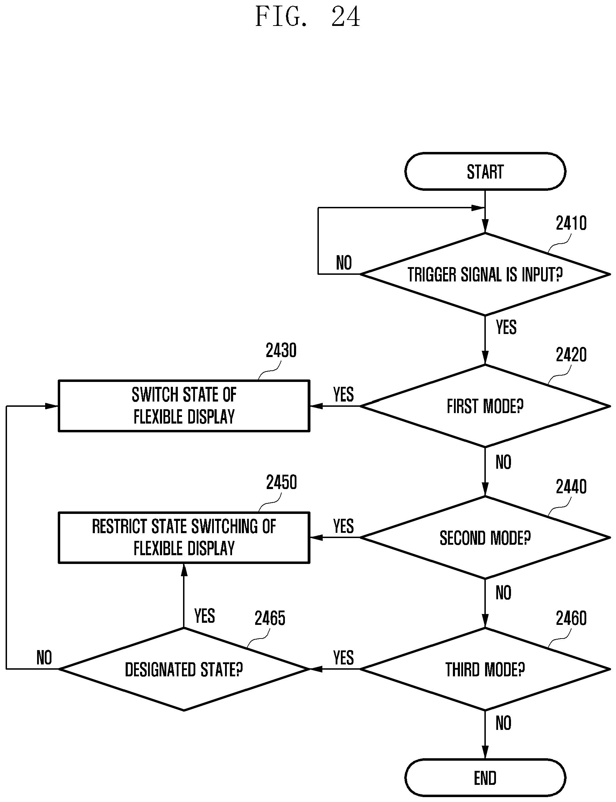

FIG. 24 is a flowchart roughly illustrating a method of controlling mode change of an electronic device according to various embodiments of the disclosure.

According to an embodiment, a method mentioned with reference to FIG. 24 may be performed, for example, by means of the elements of the electronic device 200 described with reference to FIG. 6. The method mentioned with reference to FIG. 24 may include, for example, embodiments described with reference to FIG. 1 to FIG. 22. In an embodiment below, operations may be sequentially performed, but sequential performance is not necessarily required. For example, the order of the operations may be changed. For example, the operations may be performed in parallel. For example, the operations may not be performed all and at least some of them may be performed.

In operation 2410, the processor 120 may identify whether a trigger signal (e.g., a input signal) is input via the input unit 610.

According to an embodiment, the processor 120 may identify whether a trigger signal for switching the electronic device 200 from a slide-in state to a slide-out state or switching same from a slide-out state to a slide-in state is input via the input unit 610.

In operation 2420, the processor 120 may identify whether the electronic device 200 has been configured to be in a first mode (e.g., a reduction mode and/or expansion mode).

In operation 2430, in a case where it is identified through operation 2420 above that the electronic device 200 has been configured to be in the first mode, the processor 120 may control the state of the flexible display 230 to be switched, based on the trigger signal.

According to an embodiment, in a case where the electronic device 200 has been configured to be in the first mode, when a trigger signal related to switching of a slide-in state and/or slide-out state of the flexible display 230 is input, the processor 120 may control the flexible display 230 to be switched from a slide-in state to a slide-out state or switched from a slide-out state to a slide-in state.

In operation 2440, in a case where it is identified through operation 2420 above that the electronic device 200 is not configured to be in the first mode, the processor 120 may identify whether the electronic device 200 has been configured to be in a second mode (e.g., a fixing mode).

In operation 2450, in a case where it is identified through operation 2440 above that the electronic device 200 has been configured to be in the second mode, even if the trigger signal is input, the processor 120 may perform control to restrict the state of the flexible display 230 being switched.

According to an embodiment, in a case where the electronic device 200 has been configured to be in the second mode, even if a trigger signal related to switching of a slide-in state and/or slide-out state of the flexible display 230 is input, the processor 120 may restrict the flexible display 230 being switched from a slide-in state to a slide-out state or switched from a slide-out state to a slide-in state.

In operation 2460, in a case where it is identified through operation 2440 above that the electronic device 200 is not configured to be in the second mode, the processor 120 may identify whether the electronic device 200 has been configured to be in a third mode (e.g., a smart mode).

In operation 2465, in a case where it is identified through operation 2460 above that the electronic device 200 has been configured to be in the third mode, the processor 120 may identify whether the electronic device 200 is in a state corresponding to a designated condition.

According to an embodiment, in a case where it is identified through operation 2465 above that the electronic device 200 is not in the state corresponding to the designated condition, the processor 120 may control the state of the flexible display 230 to be switched, based on a trigger signal as in operation 2430.

According to an embodiment, in a case where it is identified through operation 2465 above that the electronic device 200 is in the state corresponding to the designated condition, even if a trigger signal is input, the processor 120 may perform control to restrict the state of the flexible display 230 being switched, as in operation 2450.

An electronic device 200 according to an embodiment of the disclosure may include a first housing 210, a second housing 220 slidably coupled to the first housing 210, a flexible display 230 having a visually exposed display region (230a, 230b) that is reduced or expanded based on sliding in or sliding out of the second housing 220, an input unit 610 configured to receive an input, a processor 120, and, memory 130 storing instructions that, when executed by the processor, cause the electronic device to: identify whether a condition of the electronic device for disabling sliding in or sliding out of the second housing is satisfied, receive an input via the input unit, operate in a first mode in which slide-in or slide-out of the second housing 220 is controlled based on the input and the condition not being satisfied, operate in the first mode in which slide-in or slide-out of the second housing 220 is disabled based on the condition being satisfied, and operate in a second mode in which the slide-in or slide-out of the second housing 220 is disabled regardless of the condition being satisfied or not.

According to and embodiment, the electronic device 200 is configured to provide a trigger selection mode for controlling sliding in or sliding out of the second housing 220, based on the input.

According to an embodiment, the electronic device 200 is configured to, in the second mode, in case that the input is received via the input unit 610, allow the flexible display 230 to provide a pop-up message 1720 notifying that the second mode has been configured.

According to an embodiment, the trigger selection mode may include a third mode (e.g., a display reduction or expansion mode) of changing a slide-in or slide-out state of the second housing 220 to correspond to input of the trigger signal for driving the second housing 220 to be slid in or slid out.

According to an embodiment, the condition of the electronic device 200 for deactivating sliding in or sliding out of the second housing 220 is identified as being satisfied if the flexible display 230 of the electronic device 200 facing down.

According to an embodiment, the condition of the electronic device 200 for deactivating sliding in or sliding out of the second housing 220 is identified as being satisfied if the electronic device 200 is placed in a pocket.

According to an embodiment, the condition of the electronic device 200 for deactivating sliding in or sliding out of the second housing 220 is identified as being satisfied if a defined application is being executed.

According to an embodiment, the condition of the electronic device 200 for deactivating sliding in or sliding out of the second housing 220 is identified as being satisfied if the electronic device 200 is being charged.

According to an embodiment, the electronic device 200 may further include a sensor module 176, and in the first mode, the processor 120 may detect an internal temperature and/or moisture of the electronic device 200 by using the sensor module 176 and, in case that the internal temperature of the electronic device 200 exceeds a designated temperature or moisture is detected in the electronic device 200, may control not to change the slide-in or slide-out state of the second housing 220. This may prevent breakage of the drive motor 260 and/or moisture ingress.

According to an embodiment, while the electronic device 200 is in a state corresponding to a designated condition, even in case that the trigger signal is input, the processor 120 may control the second housing 220 not to change a slide-in or slide-out state.

According to an embodiment, the processor 120 may be configured to configure a state change of the flexible display 230, based on at least one of a touch signal, a long press signal, a double tap signal, a drag and drop signal, a swipe signal, and a tap signal which are input via the input unit 610.

A method of controlling an electronic device 200 according to an embodiment of the disclosure may include identifying whether a trigger signal for reducing or expanding a flexible display 230 to correspond to sliding in or sliding out of a second housing 220 slidably coupled to a first housing 210 of the electronic device 200 is input via an input unit 610, and providing a trigger selection mode for controlling sliding in or sliding out of the second housing 220, based on identification of input of the trigger signal.

According to an embodiment, the trigger selection mode may include a mode of not changing a slide-in or slide-out state of the second housing 220 in case that the trigger signal for driving the second housing 220 to be slid in or slid out is input.

According to an embodiment, the trigger selection mode may include a mode of changing a slide-in or slide-out state of the second housing 220 to correspond to input of the trigger signal for driving the second housing 220 to be slid in or slid out.

According to an embodiment, the trigger selection mode may include a mode of, in case that the trigger signal for driving the second housing 220 to be slid in or slid out is input, identifying a state of the second housing 220, and changing a slide-in or slide-out state of the second housing 220, based on state identification information of the second housing 220.

According to an embodiment, the method may include controlling not to change the slide-in or slide-out state of the second housing 220 in case that the flexible display 230 is identified as having been flipped over toward the ground or being in a pocket, based on the state identification information of the second housing 220.

According to an embodiment, the method may include controlling not to change the slide-in or slide-out state of the second housing 220 in case that the electronic device 200 is running a designated application or the electronic device 200 is being charged.

According to an embodiment, the method may include detecting an internal temperature and/or moisture of the electronic device 200 by using a sensor module 176 and, in case that the internal temperature of the electronic device 200 exceeds a designated temperature or moisture is detected in the electronic device 200, controlling not to change the slide-in or slide-out state of the second housing 220.

According to an embodiment, the method may include controlling the second housing 220 not to change a slide-in or slide-out state even in case that the trigger signal is input while the electronic device 200 is in a state corresponding to a designated condition.

According to an embodiment, the method may include controlling a state change of the flexible display 230, based on at least one of a touch signal, a long press signal, a double tap signal, a drag and drop signal, a swipe signal, and a tap signal which are input via the input unit 610.

According to an embodiment, the method may include providing, by the flexible display 230, a pop-up message 1720 notifying that a designated mode has been configured, in case that the trigger signal is input via the input unit 610.

According to an embodiment, the method of controlling the electronic device may be performed using a non-transitory computer-readable storage medium that stores one or more programs. The one or more programs according to an embodiment may include instructions for performing at least one operation related to the method of controlling the electronic device.

The disclosure has been described according to various embodiments of the disclosure, but changes and modifications of the disclosure by a person skilled in the art without departing from the technical idea of the disclosure are also obviously included in the disclosure.

## Claims

1. An electronic device (200) comprising:
a first housing (210);
a second housing (220) slidably coupled to the first housing (210);
a flexible display (230) having a visually exposed display region (230a, 230b) that is reduced or expanded based on sliding in or sliding out of the second housing (220);
an input unit (610) configured to receive an input;
a processor; and
memory (130) storing instructions that, when executed by the processor, cause the electronic device to:
identify whether a condition of the electronic device for disabling sliding in or sliding out of the second housing is satisfied,
receive an input via the input unit,
operate in a first mode in which slide-in or slide-out of the second housing (220) is controlled based on the input and the condition not being satisfied,
operate in the first mode in which slide-in or slide-out of the second housing (220) is disabled based on the condition being satisfied, and
operate in a second mode in which the slide-in or slide-out of the second housing (220) is disabled regardless of the condition being satisfied or not.

2. The electronic device of claim 1, the electronic device (200) is configured to provide a trigger selection mode for controlling sliding in or sliding out of the second housing (220), based on the input.

3. The electronic device of claim 1 or claim 2,
wherein the electronic device (200) is configured to, in the second mode, in case that the input is received via the input unit (610), allow the flexible display (230) to provide a pop-up message (1720) notifying that the second mode has been configured.

4. The electronic device of any one of claims 1 to 3, wherein the trigger selection mode comprises a third mode in which the electronic device (200) is configured to control to change a slide-in or slide-out state of the second housing (220) to correspond to the input for driving the second housing (220) to be slid in or slid out.

5. The electronic device of any one of claims 1 to 4, wherein the condition of the electronic device (200) for deactivating sliding in or sliding out of the second housing (220) is identified as being satisfied if the flexible display (230) of the electronic device (200) facing down.

6. The electronic device of any one of claims 1 to 4, wherein the condition of the electronic device (200) for deactivating sliding in or sliding out of the second housing (220) is identified as being satisfied if the electronic device (200) is placed in a pocket.

7. The electronic device of any one of claims 1 to 4, wherein the condition of the electronic device (200) for deactivating sliding in or sliding out of the second housing (220) is identified as being satisfied if a defined application is being executed.

8. The electronic device of any one of claims 1 to 4, wherein the condition of the electronic device (200) for deactivating sliding in or sliding out of the second housing (220) is identified as being satisfied if the electronic device (200) is being charged.

9. The electronic device of any one of claims 1 to 8, wherein the electronic device (200) further comprises a sensor module (176), and
wherein the processor (120) is configured to, in the first mode, detect an internal temperature and/or moisture of the electronic device (200) by using the sensor module (176) and, in case that the internal temperature of the electronic device (200) exceeds a designated temperature or moisture is detected in the electronic device (200), control not to change the slide-in or slide-out state of the second housing (220).

10. A method of controlling an electronic device (200), the method comprising:
identifying (2310) whether a trigger signal for reducing or expanding a flexible display (230) to correspond to sliding in or sliding out of a second housing (220) slidably coupled to a first housing (210) of the electronic device (200) is input via an input unit (610); and
providing (2320) a trigger selection mode for controlling sliding in or sliding out of the second housing (220), based on identification of input of the trigger signal.

11. The method of claim 10, wherein the trigger selection mode comprises a mode (2340) of not changing a slide-in or slide-out state of the second housing (220) in case that the trigger signal for driving the second housing (220) to be slid in or slid out is input, and/or
the method comprising in case that the trigger signal is input via the input unit (610), providing, by the flexible display (230), a pop-up message (1720) notifying that a designated mode (2340) has been configured.

12. The method of claim 10 or claim 11, wherein the trigger selection mode comprises a mode (2330) of changing a slide-in or slide-out state of the second housing (220) to correspond to input of the trigger signal for driving the second housing (220) to be slid in or slid out.

13. The method of any one of claims 10 to 12, wherein the trigger selection mode comprises a mode (2350) of, in case that the trigger signal for driving the second housing (220) to be slid in or slid out is input, identifying a state of the second housing (220), and changing a slide-in or slide-out state of the second housing (220), based on state identification information of the second housing (220).

14. The method of any one of claims 10 to 13, comprising,
in case that the flexible display (230) is identified as having been flipped over toward the ground or being in a pocket, based on the state identification information of the second housing (220), controlling not to change the slide-in or slide-out state of the second housing (220), and/or
in case that the electronic device (200) is running a designated application or the electronic device (200) is being charged, controlling not to change the slide-in or slide-out state of the second housing (220).

15. The method of any one of claims 10 to 14, comprising, detecting an internal temperature and/or moisture of the electronic device (200) by using a sensor module (176) and, in case that the internal temperature of the electronic device (200) exceeds a designated temperature or moisture is detected in the electronic device (200), controlling not to change the slide-in or slide-out state of the second housing (220).
